# EUROPEAN PATENT SPECIFICATION

(11) **EP 2 613 528 B1**
(45) Date of publication and mention of the grant of the patent: **05.10.2022**
(21) Application number: 11821601.9
(22) Date of filing: 23.08.2011
(51) Int. Cl.: H04N 7/173, G06F 13/00, H04H 60/73, H04N 21/434, H04N 21/462, H04N 21/478, H04N 21/6543

(54) **RECEIVING DEVICE, RECEIVING METHOD AND PROGRAM**
EMPFANGSVORRICHTUNG, EMPFANGSVERFAHREN UND PROGRAMM DAFÜR
DISPOSITIF DE RÉCEPTION, PROCÉDÉ DE RÉCEPTION ET PROGRAMME ASSOCIÉ

(30) Priority: 04.08.2011 US 201161515107 P; 30.08.2010 US 378277 P
(43) Date of publication of application: 10.07.2013
(73) Proprietor: Saturn Licensing LLC, New York, NY 10022-3211 (US)
(72) Inventor: KITAHARA, Jun, Tokyo 108-0075 (JP); KITAZATO, Naohisa, Tokyo 108-0075 (JP); DEWA, Yoshiharu, Tokyo 108-0075 (JP); YAMAGISHI, Yasuaki, Tokyo 108-0075 (JP)
(74) Representative: Witte, Weller & Partner Patentanwälte mbB
(86) International application number: PCT/JP2011/068901
(87) International publication number: WO 2012/029584

(56) References cited:
- EP-A1- 2 034 727
- EP-A2- 1 343 325
- WO-A1-01/53966
- JP-A- 2003 264 748
- JP-A- 2006 287 872
- JP-A- 2009 031 952
- JP-A- 2009 065 422
- JP-A- 2010 028 726
- US-A1- 2003 099 459
- US-A1- 2009 295 989
- US-B1- 7 028 327
- CECCARELLI M ET AL: "Home multimedia systems: on personal video libraries", MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, vol. 2, 7 June 1999 (1999-06-07), pages 1082-1085, XP010519568, DOI: 10.1109/MMCS.1999.778665 ISBN: 978-0-7695-0253-3

## Description

### [Technical Field]

This technology relates to a reception apparatus, a reception method, and a program. More particularly, this technology relates to a reception apparatus, a reception method, and a program suitable for use in executing a type of content that is different from AV content constituting so-called TV programs typically in digital TV broadcasting.

### [Background Art]

The digitization of TV broadcasting has been promoted in Japan, and digital terrestrial broadcasting, BS digital broadcasting and the like have gained widespread acceptance in the country. Also, in digital TV broadcasting such as terrestrial digital broadcasting, not only the broadcasting of AV content making up so-called TV programs but also data broadcasting using BML (Broadcast Markup Language) has been implemented (e.g., see Patent Literature 1).

For example, a TV set capable of receiving data broadcasting can display information about the currently broadcast program as well as information not related to the ongoing program (announcements of other programs, news, weather reports, traffic information, etc.), and execute an application program linked to the program being broadcast (AV content).

Also, the above-mentioned TV set is configured to behave differently in two cases: when implementing services managed by the broadcasting organization offering digital TV broadcasting (e.g., the service of displaying weather reports), and when carrying out services not managed by broadcasting organizations (e.g., the service of connecting to the Internet to display Web pages, etc.).

That is, when weather reports are to be displayed in data broadcasting as one of the services managed by the broadcasting organization for example, processes may be carried out to read from the TV set pre-registered information about the area where the user lives so that weather reports corresponding to the place where the user lives is displayed.

On the other hand, when Web pages are to be displayed through connection with the Internet as one of the services not managed by broadcasting organizations for example, the above-mentioned read process or the like is not performed so that any process not intended by the user (e.g., process in which the area information may be fraudulently read and sent to a malicious third party) will not be carried out.

Likewise in Europe, a type of broadcasting corresponding to data broadcasting in Japan has been implemented in accordance with DVB-MHP (digital video broadcasting-multimedia home platform) that stipulates how data broadcast content should be described and distributed.

Patent literature 2 and 3 both disclose transmitting information to access additional content alongside the broadcast program.

### [Citation List]

### [Patent Literature]

[PTL 1]
   JP 2003-131981A
[PTL 2]
   US7028327
[PTL 3]
   US2009/295989

### [Summary]

### [Technical Problem]

Meanwhile, in digital TV broadcasting in the United States as per ATSC (Advanced Television Systems Committee) 2.0, a service corresponding to data broadcasting in digital TV broadcasting in Japan is scheduled to be implemented through acquisition of HTML documents described in HTML (Hyper Text Markup Language) from servers managed by broadcasting organizations.

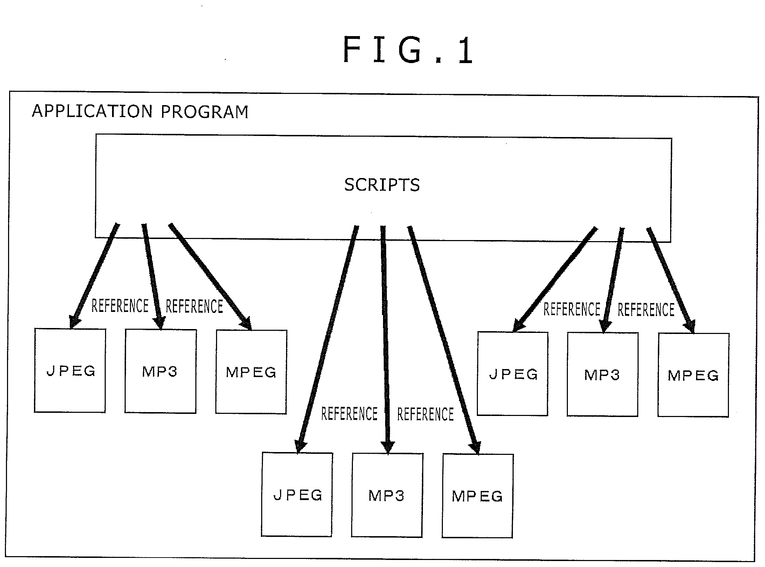

Suppose that as shown in Fig. 1, the service is implemented using an application program composed of the resources representing pictures, sounds, still images, etc., (corresponding to "MPEG," "MP3" and "JPEG" in Fig. 1) as well as scripts (executable codes) for executing predetermined processes by referencing the resources. In that case, operation modes may be set in the application program or the like and, in accordance with the operation modes thus established, specific processes such as the read process may be enabled (or restricted).

Specifically, in the case of an application program acquired from a server managed by the broadcasting organization, an operation mode may be set to enable (not restrict) the execution of a specific process. And in the case of an application program acquired from a server on the Internet not managed by broadcasting organizations, an operation mode may be set to disable (restrict) the execution of a specific process.

Application programs such as one shown in Fig. 1 may each be structured with, say, a plurality of class files (scripts) prepared in Java (registered trademark) and organized in a file structure called "jar" as well as with resources (pictures, sounds, still images, etc.).

If application programs are each structured with resources and scripts as shown in Fig. 1, the boundaries between the application programs are distinct. This makes it possible to set an operation mode in each application program to enable (or restrict) a specific process (read process, etc.).

By contrast, where HTML documents are used as scheduled for digital TV broadcasting in the United States, operation modes cannot be set in application programs such as one shown in Fig. 1.

For example, where the service is implemented using HTML documents, a single application program such as one in Fig. 1 is not executed. Instead, the HTML documents targeted to be executed make transition from one document to another, with each HTML document executed independently.

Consequently, no operation mode can be set in each HTML document executed independently as one application program for implementing the service.

For that reason, where HTML documents are used as scheduled in the United States, it is not possible to enable (or restrict) specific processes in accordance with operation modes; processes not intended by the user may well be carried out.

This technique has been made in view of the above circumstances and provides arrangements for preventing the processes not intended by the user from getting performed when a data broadcast service is implemented using document transitions.

### [Solution to Problem]

The invention is defined by the appended independent claims. Advantageous embodiments are defined by the appended dependent claims.

### [Advantageous Effect of Invention]

According to this technology, it is thus possible to prevent any process not intended by the user from getting performed when a data broadcast service is implemented through transitions of documents.

### [Brief Description of Drawings]

[Fig. 1]
   Fig. 1 is a view showing a typical application program made up of resources and scripts.
[Fig. 2]

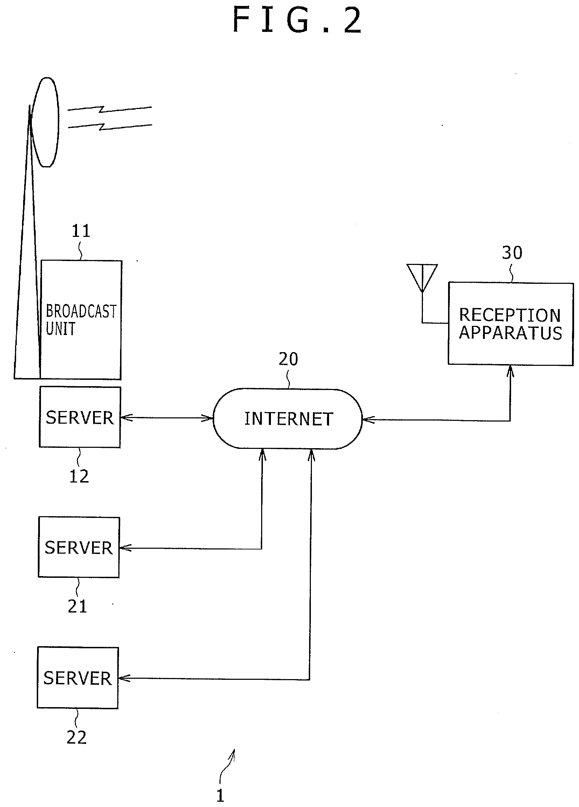

   Fig. 2 is a diagram showing a typical broadcasting system as one embodiment.
[Fig. 3]

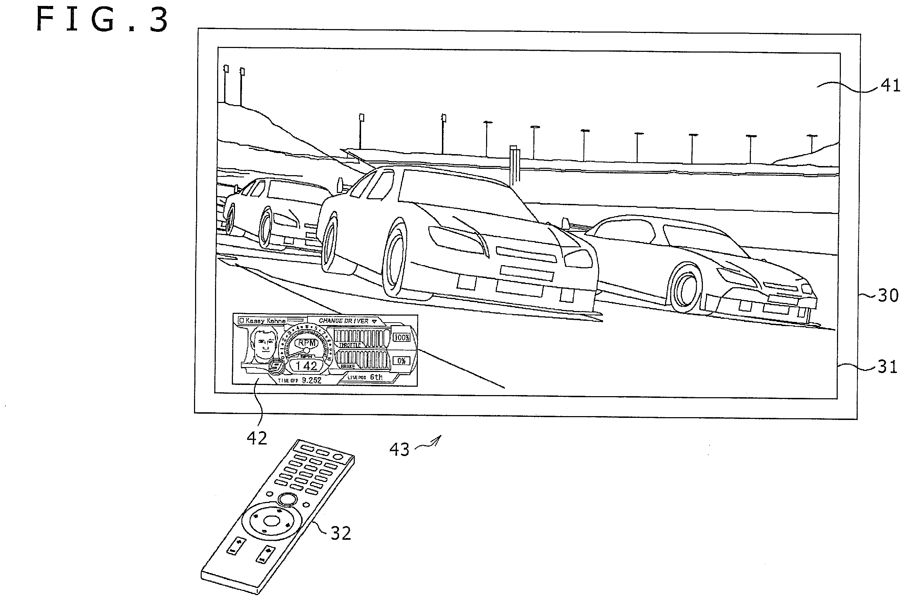

   Fig. 3 is a view showing a typical screen displayed on a monitor by a reception apparatus.
[Fig. 4]

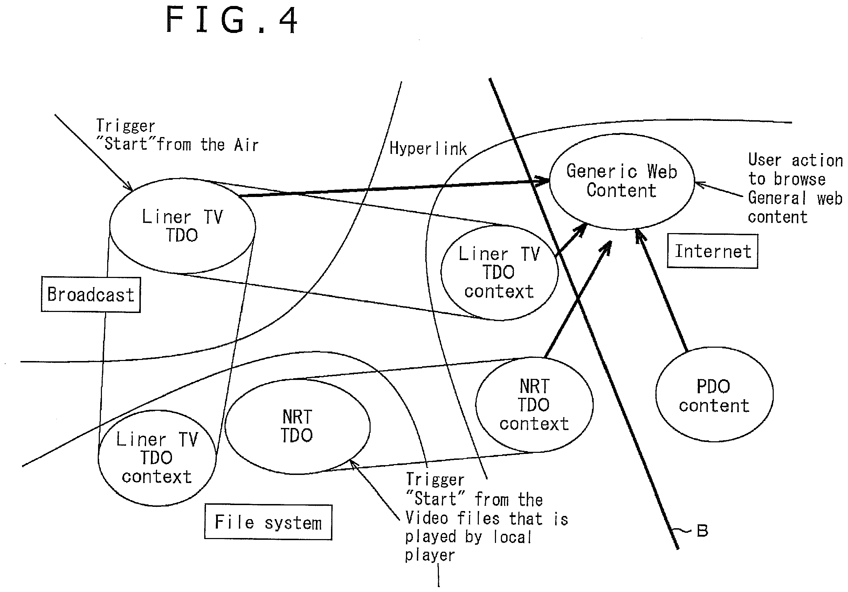

   Fig. 4 is an explanatory view outlining this technique.
[Fig. 5]

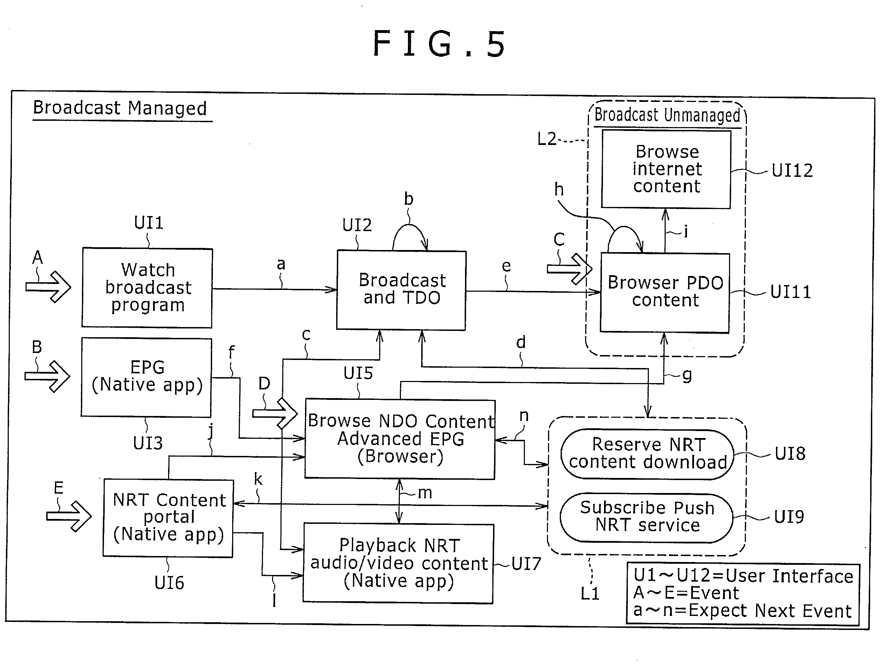

   Fig. 5 is a schematic view showing typical screen transitions displayed on the monitor.
[Fig. 6]

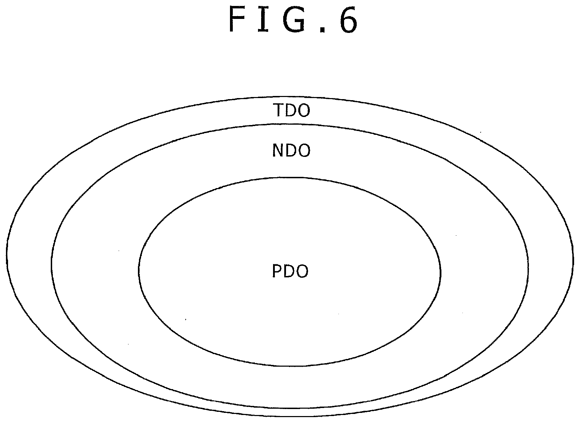

   Fig. 6 is a view detailing various DO's.
[Fig. 7]

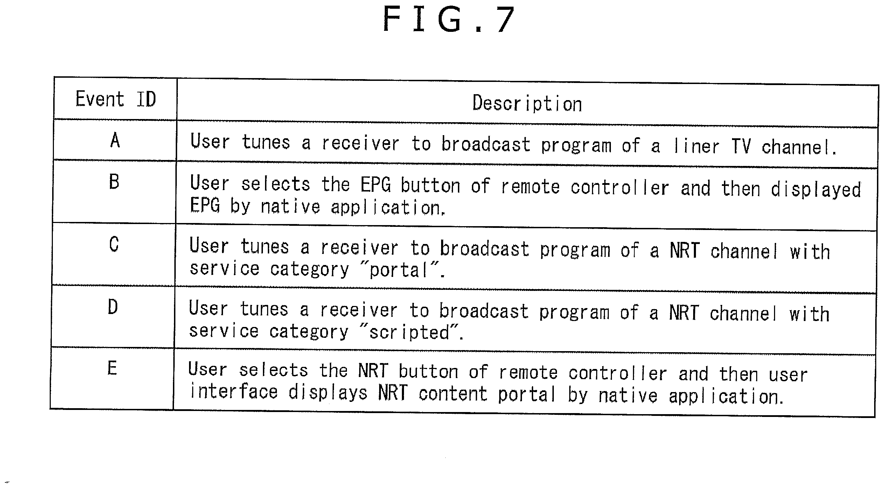

   Fig. 7 is a view detailing various events.
[Fig. 8]

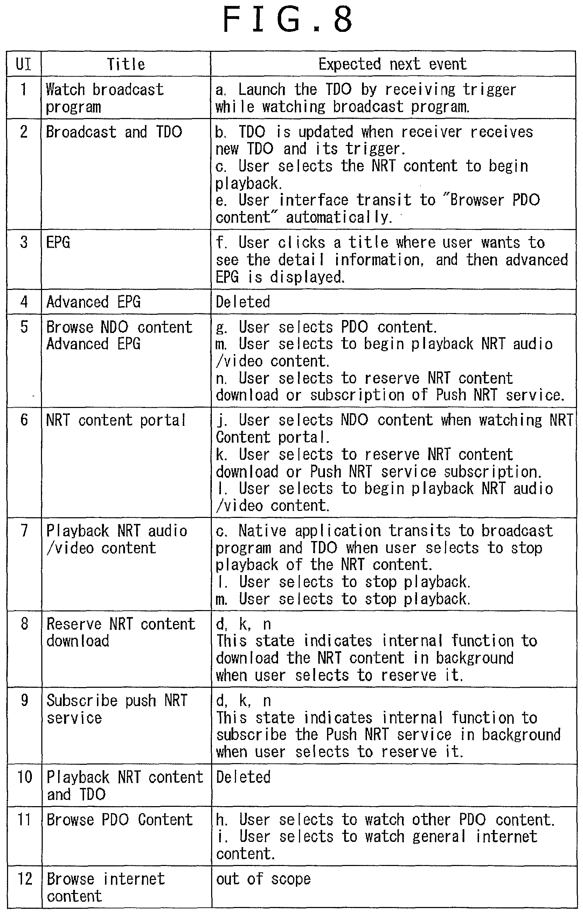

   Fig. 8 is a view listing the relations between screen transitions and events.
[Fig. 9]

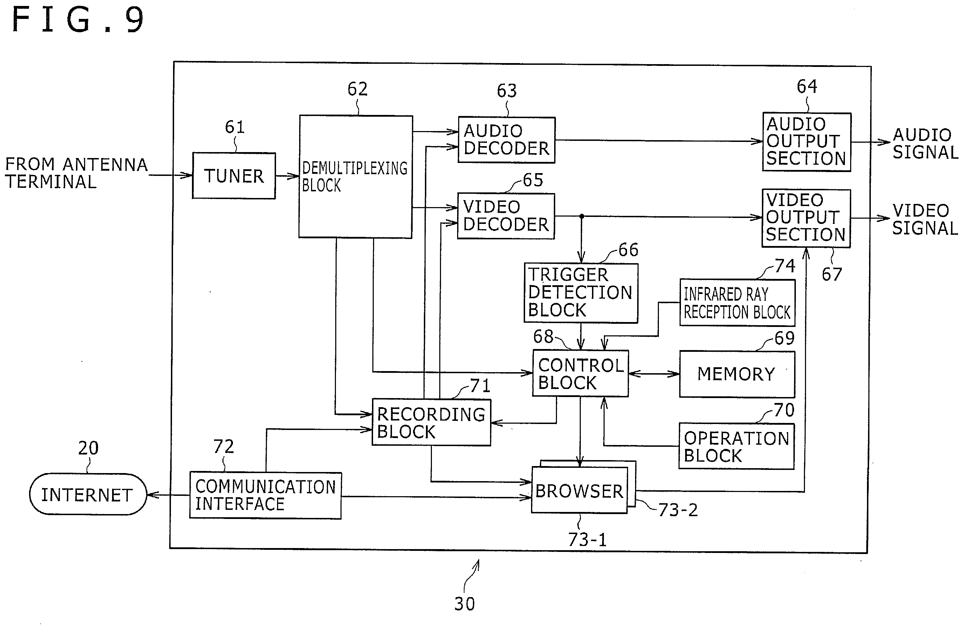

   Fig. 9 is a diagram showing a typical structure of the reception apparatus.
[Fig. 10]

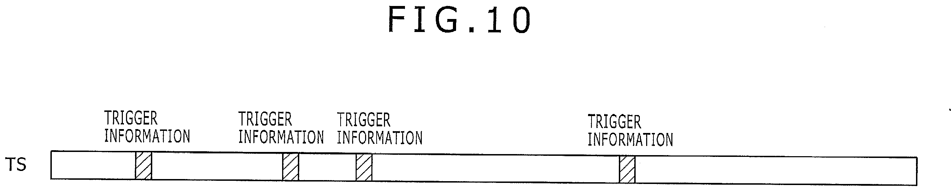

   Fig. 10 is a view illustrating the concept of trigger information being embedded in PCR packets of TS when transmitted.
[Fig. 11]

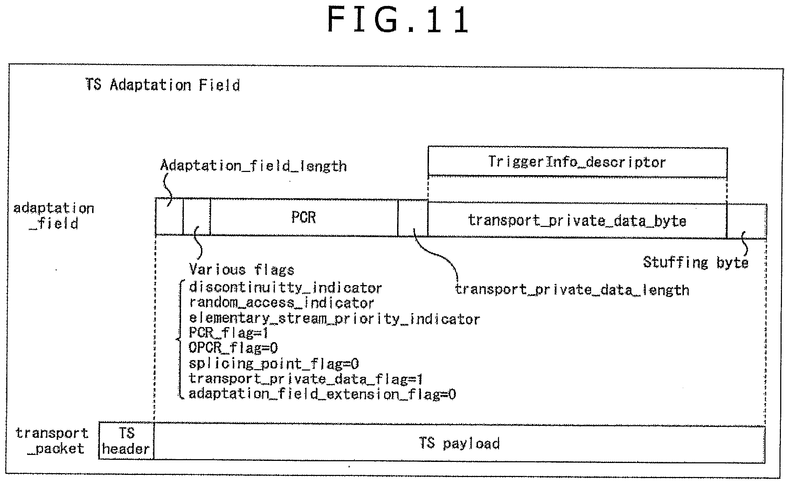

   Fig. 11 is a view showing where the trigger information is stored in a PCR packet.
[Fig. 12]

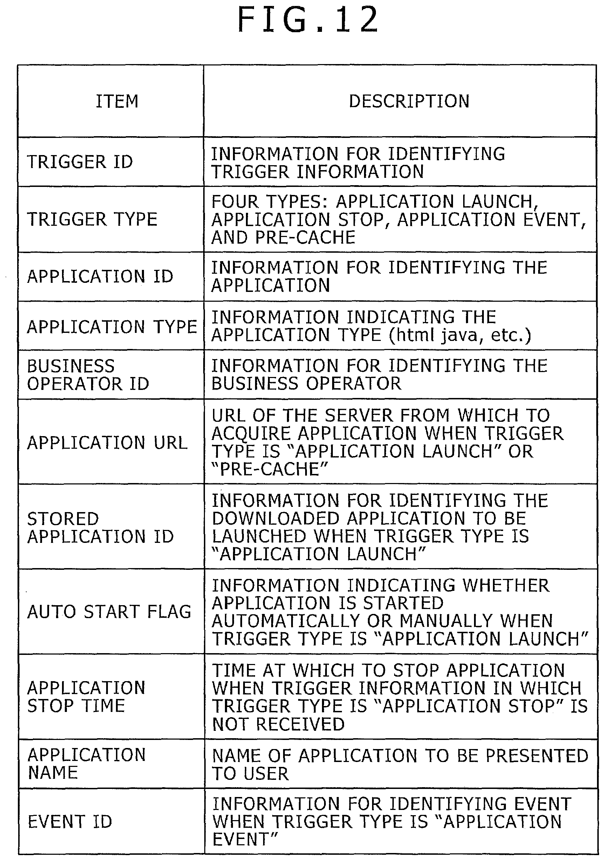

   Fig. 12 is a view listing typical information items included in the trigger information.
[Fig. 13]

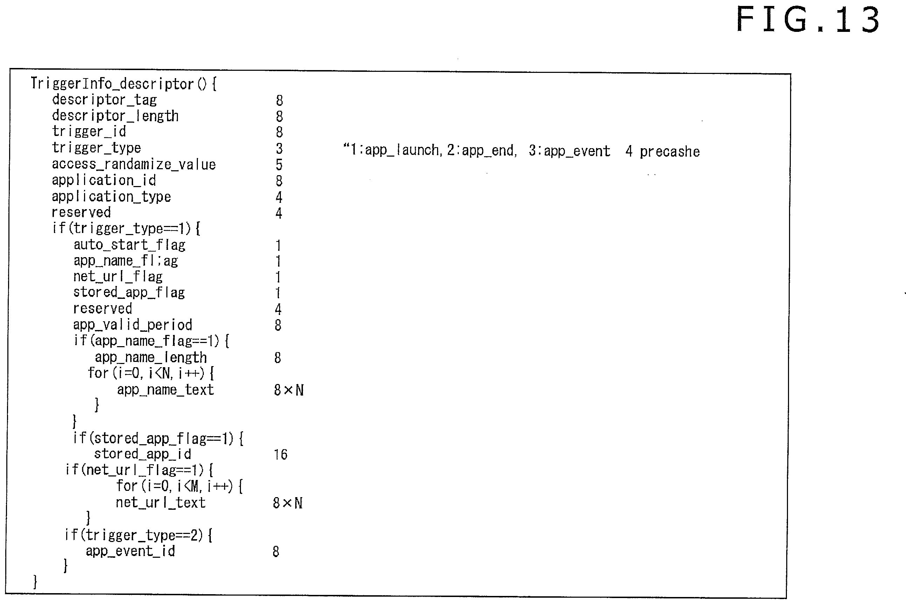

   Fig. 13 is a view showing a typical syntax of the trigger information.
[Fig. 14]

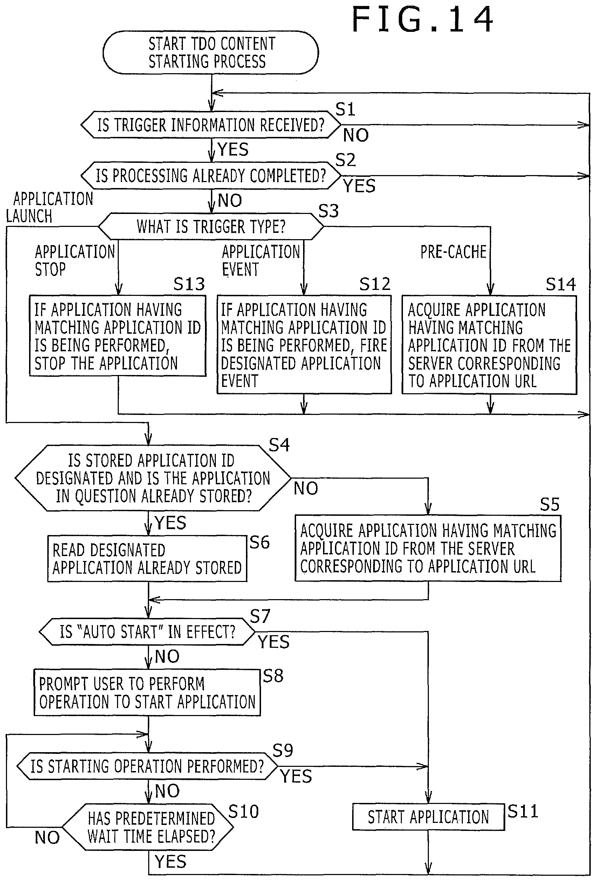

   Fig. 14 is a flowchart explanatory of an NDO content starting process.
[Fig. 15]

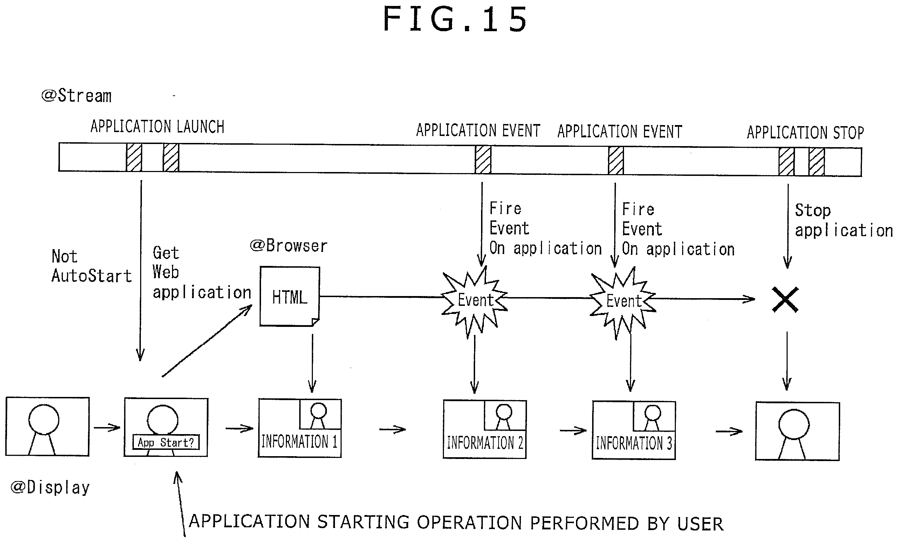

   Fig. 15 is a view showing typical screen transitions in effect when a data broadcast HTML document (TDO) is executed in linkage with the progress of a TV program.
[Fig. 16]

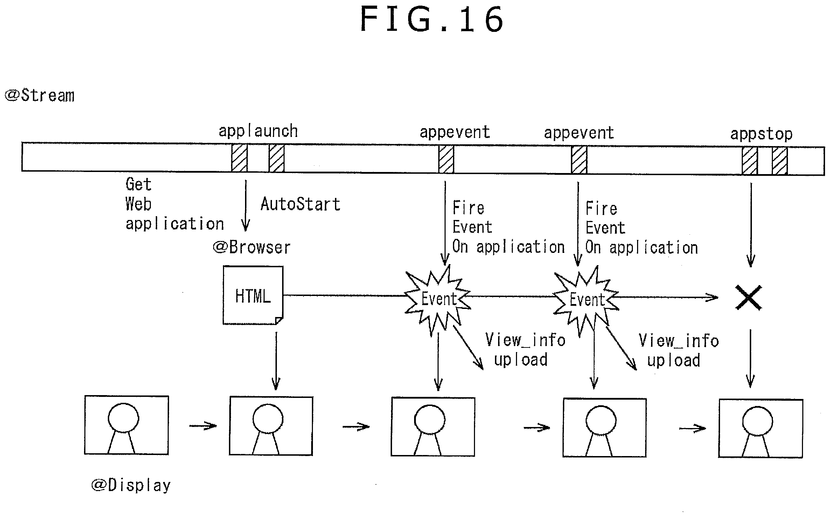

   Fig. 16 is a view showing typical screen transitions in effect when a data broadcast HTML document (TDO) not entailing screen display is executed in linkage with the progress of a TV program.
[Fig. 17]

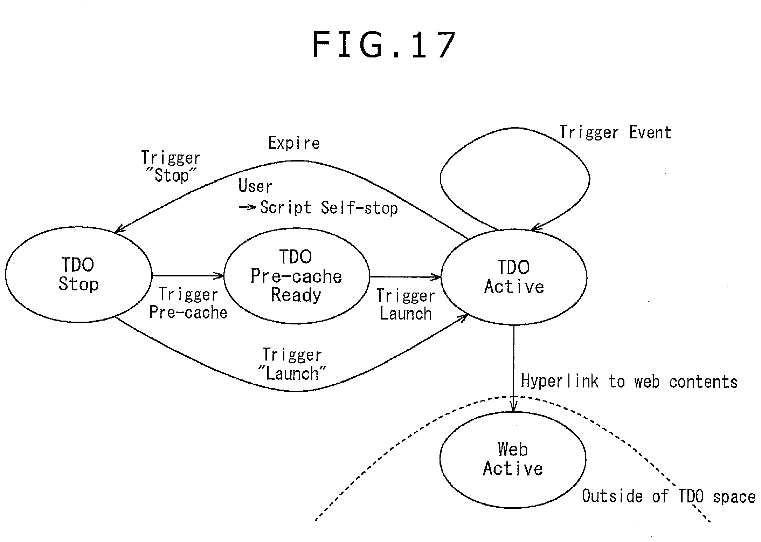

   Fig. 17 is a view showing a typical life cycle of the data broadcast HTML document (TDO).
[Fig. 18]

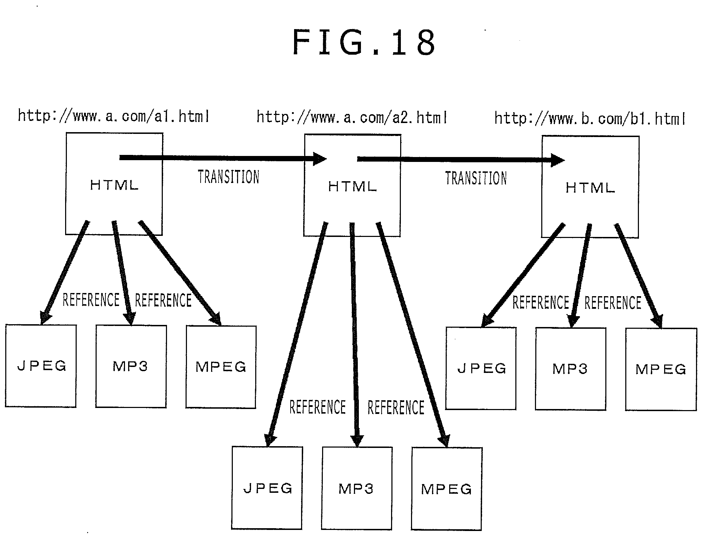

   Fig. 18 is a view showing an example of transition from a TDO active operation state to a Web active operation state.
[Fig. 19]

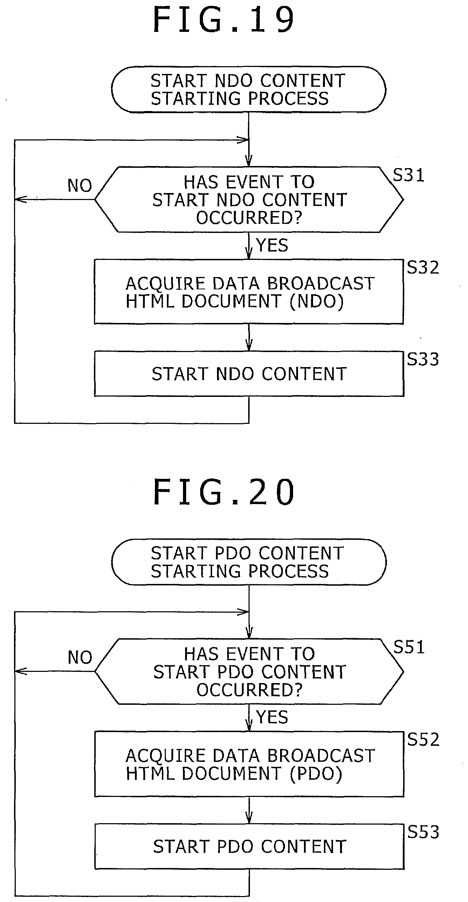

   Fig. 19 is a flowchart explanatory of an NDO content starting process.
[Fig. 20]
   Fig. 20 is a flowchart explanatory of a PDO content starting process.
[Fig. 21]

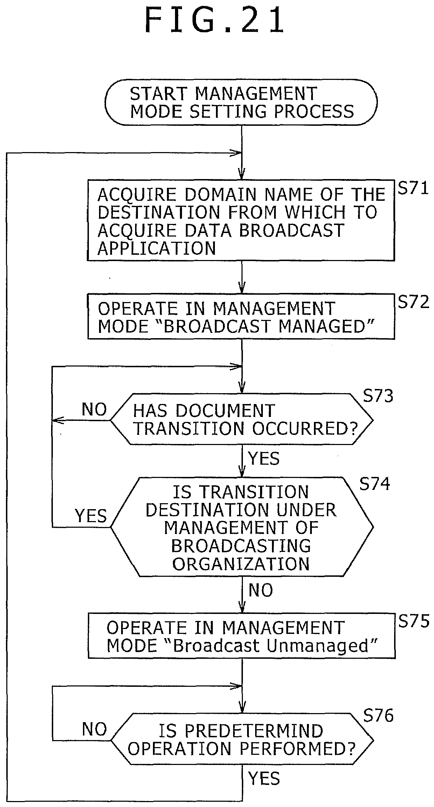

   Fig. 21 is a flowchart explaining a management mode setting process.
[Fig. 22]

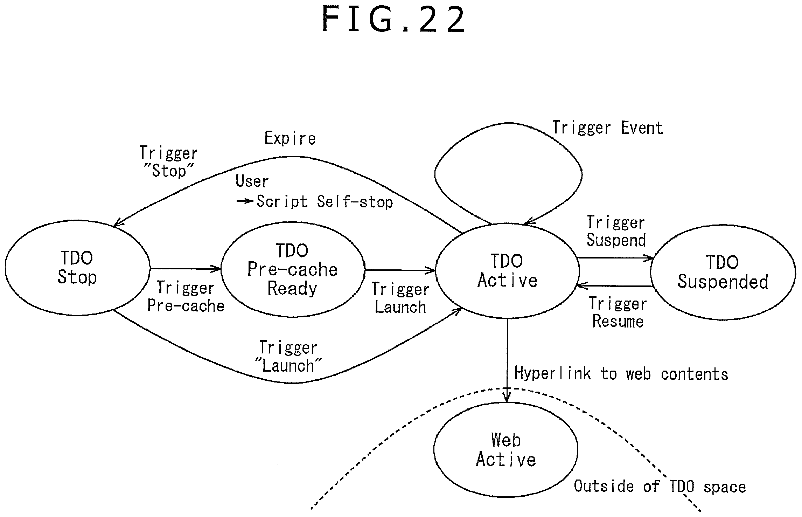

   Fig. 22 is another view showing another typical life cycle of the data broadcast HTML document (TDO).
[Fig. 23]

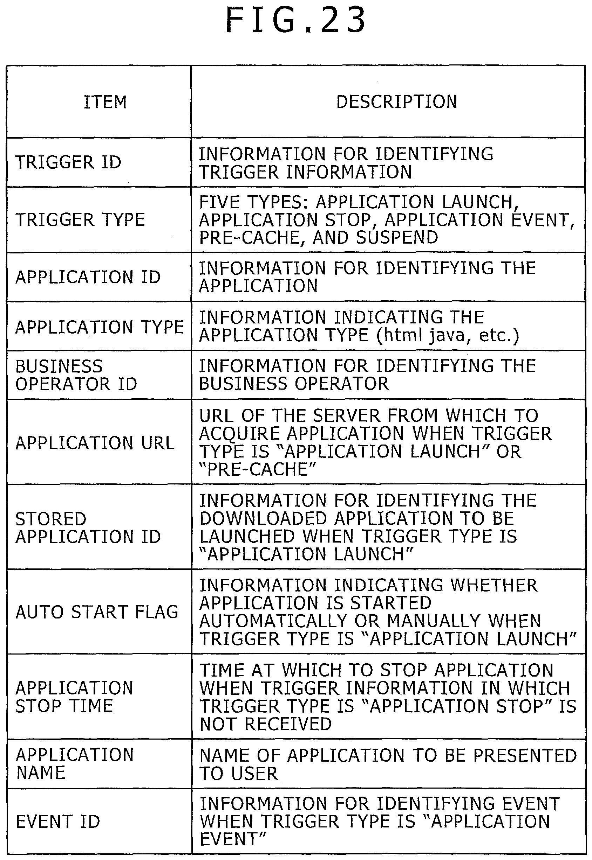

   Fig. 23 is another tabular view listing other typical information items included in the trigger information.
[Fig. 24]

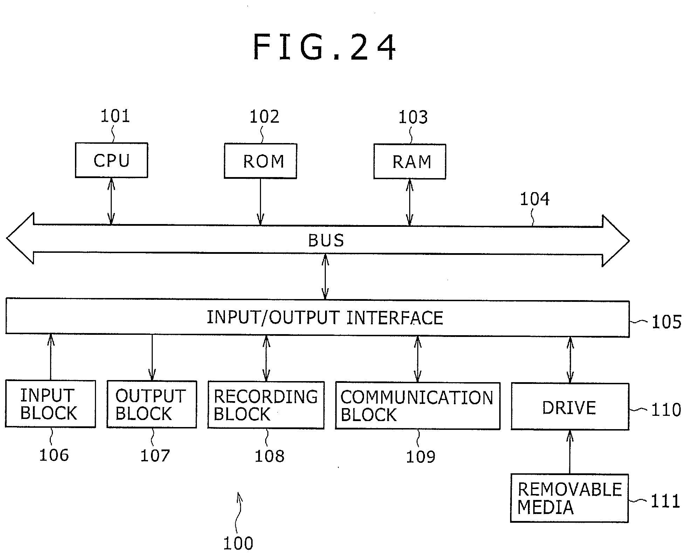

   Fig. 24 is a diagram showing a typical structure of a computer.

### [Description of Embodiments]

### <1. Embodiments>

### [Typical configuration of the broadcasting system]

Fig. 2 shows a broadcasting system 1 as one embodiment. This broadcasting system 1 is made up of a broadcast unit 11, servers 12, 21 and 22, and a reception apparatus 30. The broadcast unit 11 and server 12 are installed on the side of a broadcasting organization, and the servers 21 and 22 are set up on the side of business operators other than the broadcast organization. The reception apparatus 30 is installed on the side of viewers.

The servers 12, 21 and 22, and the reception apparatus 30 are interconnected via the Internet 30.

The broadcast unit 11 transmits (broadcasts) a digital TV broadcast signal.

It is also assumed that at predetermined timings, the broadcast unit 11 transmits trigger information in packets containing PCR (Program Clock Reference; packets are called PCR packets hereunder) as part of the TS packets making up a transport stream (which is called TS hereunder) of the digital TV broadcast signal.

In this context, the trigger information is composed of information indicating the timings for executing data broadcast HTML documents as the HTML documents to be executed to implement a data broadcast service, of information indicating the destinations from which to acquire the data broadcast HTML documents, and the like. The trigger information will be discussed later in detail by reference to Figs. 10 through 13.

The server 12 is managed on the side of the broadcasting organization and holds the data broadcast HTML documents authorized by the broadcasting organization. The server 12 provides the data broadcast HTML documents and others it holds in response to requests from the reception apparatus 30 accessing the server 12 via the Internet 20.

The server 21 is not managed on the side of the broadcasting organization managing the server 12, and holds the data broadcast HTML documents not authorized by the broadcasting organization. The server 21 provides the data broadcast HTML documents and others it holds in response to requests from the reception apparatus 30 accessing the server 21 via the Internet 20.

The server 22 provides Web sites to terminal equipment connected to the Internet 20, and is not managed on the side of the broadcasting organization managing the server 12. The server 22 provides Web page HTML documents and others in response to requests from the reception apparatus 30 accessing the server 22 via the Internet 20. Incidentally, the Web page HTML document signifies an HTML document that presents a Web page.

That is, the servers 21 and 22 are managed by business operators other than the broadcasting organization managing the server 12.

The reception apparatus 30 receives a digital TV broadcast signal transmitted from the broadcast unit 11 and acquires therefrom pictures and sounds of the AV content constituting TV programs. The reception apparatus 30 outputs the acquired pictures to a monitor (e.g., monitor 30 in Fig. 3, to be discussed later) and the acquired sounds to speakers (not shown).

Also, the reception apparatus 30 accesses the server 12 or the server 21 via the Internet 20 to acquire and execute data broadcast HTML documents. This enables the reception apparatus 30 to display a picture 43 made up of an AV content picture 41 superimposed with a data broadcast content picture 42, on the monitor 31, not shown. Incidentally, the reception apparatus 30 can be operated from a remote location by use of a remote controller 32.

Returning to Fig. 2, also, the reception apparatus 30 accesses the server 22 via the Internet 20 to acquire and execute Web page HTML documents.

This reception apparatus 30 may be either set up as a stand-alone unit or incorporated in a TV set or a video recorder for example. A detailed structure of the reception apparatus 30 will be discussed later by reference to Fig. 9.

The broadcasting system 1 is configured as described in the above paragraphs.

### [Method for managing description documents]

Explained below in reference to Figs. 4 through 8 is a method for managing description documents according to this technology.

The point of this technology is that the reception apparatus 30 is caused to permit or restrict specific processes that are performed through execution of HTML documents, depending on whether a given HTML document acquired via the Internet 20 and executed is managed by the broadcasting organization or by some other business operator.

For example, if the reception apparatus 30 executes an HTML document managed by the broadcasting organization, such as a data broadcast HTML document from the server 12 installed on the side of the broadcasting organization, a specific process is allowed to be performed (not restricted) in accordance with the HTML document in question.

On the other hand, if the reception apparatus 30 executes an HTML document not managed by the broadcasting organization, such as a data broadcast HTML document obtained from the server 21 installed on the side of some other business operator or a Web page HTML document acquired from the server 22, a specific process is not allowed to be performed (restricted) in accordance with the HTML document in question.

The reception apparatus 30 manages HTML documents in the manner described above. It should be noted that the HTML documents are merely an example of description documents described in a predetermined computer language for displaying types of content that are different from the AV content constituting TV programs. Thus other description documents may be used in place of the HTML documents.

Fig. 4 shows an outline of this technology.

In Fig. 4, where HTML documents on the left side of a thick-line boundary B are executed, specific processes are permitted; where HTML documents on the right side of the boundary B are executed, specific processes are restricted. Also, Fig. 4 shows three areas that vary depending on how the HTML document is acquired: broadcast area, Internet area, and file system area. These areas are explained below in detail.

For example, upon receipt of trigger information (e.g., corresponding to "Trigger "Start" from the air" in Fig. 4) included in the digital TV broadcast signal transmitted from the broadcast unit 11, the reception apparatus 30 acquires a data broadcast HTML document (e.g., corresponding "Linear TV TDO content" in "Internet" of Fig. 4) from the server 12 and executes the acquired document. Also, the reception apparatus 30 executes a data broadcast HTML document acquired beforehand from the server 12 and recorded (e.g., corresponding to "Liner TV TDO content" in "File system" of Fig. 4).

As another example, suppose that a TV program is viewed on the reception apparatus 30 using a download broadcast. In this case, upon acquiring the trigger information included in a recorded TV program (e.g., corresponding to "Trigger "Start" from the Video files that is played by local player" in Fig. 4), the reception apparatus 30 obtains a data broadcast HTML document (e.g., corresponding to "NRT TDO context" in Fig. 4) from the server 12 and executes the acquired document. Also, the reception apparatus 30 executes a data broadcast HTML document (e.g., corresponding to "NRT TDO" in Fig. 4) acquired beforehand through download broadcast from the broadcast unit 11 and recorded.

As a further example, the reception apparatus 30 acquires from the server 21 a data broadcast HTML document (e.g., corresponding to "PDO content" in Fig. 4) that can be displayed only by a specific browser, and executes the acquired document.

And when the above-described data broadcast HTML documents are executed, the reception apparatus 30 has the picture 43 of Fig. 3 displayed on the monitor 31.

Incidentally, the download broadcast is a type of broadcast that involves receiving beforehand a TV program (digital TV broadcast signal) from the broadcast unit 11, recording the received TV program, and reproducing the recorded TV program in response to the user's operation. In the ensuing description, the download broadcast will be referred to as NRT (Non Real Time) broadcast and the downloaded content as NRT content.

In this case, it is assumed for example that the driver (face) displayed as the picture 42 in Fig. 3 carries a link to the driver's Web page that may be selected by the user.

If the user performs an operation to select the driver on the picture 42 in Fig. 3, the reception apparatus 30 acquires a Web page HTML document (e.g., "Generic Web Content" in Fig. 4) from the server 22 and executes the acquired document to display the driver's Web page or the like on the monitor 31.

As explained above, when the reception apparatus 30 executes a data broadcast HTML document, it is necessary to make arrangements for permitting specific processes in order to reinforce the data broadcast service.

Specifically, if the reception apparatus 30 is to display weather reports on the user's residential area as the data broadcast service, the data broadcast HTML document needs to trigger the execution of particular processes such as the process of reading area information about the user's residential area from the reception apparatus 30 in which the information is pre-registered.

On the other hand, if the reception apparatus 30 is to display a data broadcast or a Web page not authorized by the broadcast organization, it is not desirable to let the corresponding data broadcast HTML document or Web page HTML document trigger specific processes.

For example, if a data broadcast not authorized by the broadcasting organization is to be displayed, the corresponding data broadcast HTML document is acquired from the server 21 not managed by the broadcasting organization and executed. If a Web page is to be displayed, the corresponding Web page HTML document is acquired from the server 22 not managed by the broadcasting organization and executed. In these cases, unlike the server 12 managed by the broadcasting organization, the server 21 or 22 not managed by the broadcasting organization may hold a data broadcast HTML document or a Web page HTML document prepared by a malicious third party. One such HTML document may conceivably be that which reads illicitly the pre-registered area information from the reception apparatus 30 and feeds the retrieved information to a specific server.

In view of the above, the reception apparatus 30 sets a management mode so that specific processes may be performed on the left side of the boundary B in Fig. 4 and cannot be performed on the right side of it. Depending on the management mode thus set, the reception apparatus 30 permits (or restricts) a specific process to be performed by a given HTML document.

Incidentally, the specific processes refer to the type of processes that may cause losses to the user when executed illicitly by a malicious third party. One such specific process may be the process of illicitly acquiring personal information or the like about the user so that the user's safety may be threatened thereby.

The specific processes are defined beforehand by the user or by the manufacturer manufacturing the reception apparatus 30, for example. Conceivably, the specific processes include a channel selection process in which a channel is selected, a recorder operation process in which the reception apparatus 30 functioning as a video recorder is caused to make recordings or the like, an acquisition process in which program information about the currently selected TV program is acquired, and a bookmark control process in which a particular URL (Uniform Resource Locator) is bookmarked.

Fig. 5 shows typical screen transitions displayed on the monitor 31 of the reception apparatus 30 when the HTML documents indicated in Fig. 4 are executed. A conceivable use case example is explained below in reference to Fig. 5.

In Fig. 5, UI1 through UI12 (except for UI8 and UI9) each indicate a user interface (called the UI hereunder) displayed on the monitor 31 of the reception apparatus 30. Also in Fig. 5, a dotted line L1 denotes the boundary between foreground processing and background processing. Inside the region surrounded by the dotted line L1, the processes executed in UI8 and UI9 take place internally and are not displayed on the monitor 31.

Also, reference characters A through E each indicate an event for making transition to a given UI. Reference characters "a" through "n" each denote an event for making transition from one UI to the next. Furthermore, a dotted line L2 in Fig. 5 corresponds to the boundary B shown in Fig. 4. Management modes are set so that specific process can be performed outside this boundary but cannot be performed therein. That is, outside the boundary of the dotted line L2, the management mode is set for "Broadcast Managed" in which specific processes can be performed using data broadcast HTML documents; within the boundary, the management mode is set for "Broadcast Unmanaged" in which specific processes cannot be performed using data broadcast HTML documents or Web page HTML documents.

"TDO," "NDO" and "PDO" in Fig. 5 have their authority restricted progressively, in that order, as shown in Fig. 6. Specifically, each DO (Downloadable Object) has the following features:
TDO (Triggered Downloadable Object) is the DO that has the highest authority among the three DO's and is the object that can be handled only by the broadcasting organization. TDO content is expected to be executed in linkage with the AV content constituting TV programs and the like. Since TDO is the DO handled by the broadcasting organization, the management mode is always set for "Broadcast Managed" for TDO's.

NDO (NRT Downloadable Object) is the DO that has the highest authority next to TDO. For example, NDO is the object that can be handled by business operators other than the broadcasting organization, such as content production companies or NRT service providers. NDO content is expected to be executed not only in linkage with the AV content constituting TV programs and the like but also on an individual basis. For example, if provided by an independent data broadcast channel, NDO content is executed without linkage with AV content.

Two kinds of NDO's are conceivable: those authorized by the broadcasting organization and those not authorized thereby. For the NDO's authorized by the broadcasting organization, the management mode is set for "Broadcast Managed"; for the NDO's not authorized by the broadcasting organization, the management mode is set for "Broadcast Unmanaged." With regard to the example in Fig. 5, only the NDO's authorized by the broadcasting organization are explained. In this case, the management mode is always set for "Broadcast Managed" for the NDO's.

PDO (Plain Downloadable Object) is the DO that has the lowest authority among the three DO's, and is an object that can be displayed (executed) only by a specific application program (browser 73-2 in Fig. 9, to be discussed later). For example, the PDO's can only be displayed by a browser stipulated in "Browser Profile A" of NRT 1.0. Also, the PDO's are objects that can be handled by business operators other than the broadcasting organization, such as content production companies (e.g., so-called third parties).

As with the NDO's, two kinds of PDO's are conceivable: those authorized by the broadcasting organization and those not authorized thereby. With regard to the example in Fig. 5, only the PDO's not authorized by the broadcasting organization are explained. In this case, the management mode is always set for "Broadcast Unmanaged" for the PDO's.

Fig. 7 lists explanations about events A through E shown in Fig. 5, and Fig. 8 lists the relations between UI1 through UI12 in Fig. 5 on the one hand and events "a" through "n" on the other hand. In the ensuing descriptions, reference may be made to these figures as needed.

As shown in Fig. 5, when the user selects the TV program of a particular channel as event A, the monitor 31 displays UI1 constituting the TV program or the like of the selected channel (description of event A in Fig. 7). Also, upon receipt of trigger information from the broadcast unit 11 while UI1 is being displayed, the reception apparatus 30 acquires a data broadcast HTML document (TDO) from the server 12 and has it superimposed on the picture of the TV program (description of event "a" in UI1 of Fig. 8). This causes the monitor 31 to display UI2 such as the picture 43 shown in Fig. 3.

Since UI2 is outside the boundary of the dotted line L2, the management mode is set for "Broadcast Managed" in which a specific process can be performed using a broadcast HTML document (TDO). That is, because the broadcast HTML document (TDO) is acquired from the server 12 managed by the broadcasting organization, a specific process is allowed to be performed.

Also, upon receipt of trigger information while UI2 is being displayed, the reception apparatus 30 acquires a new data broadcast HTML document (TDO) and displays the acquired document (description of event "b" in UI2 of Fig. 8). This brings about an update of the picture (e.g., picture 42 in Fig. 3) of the data broadcast HTML document (TDO) superimposed on the picture of the TV program. Also, upon receipt of a data broadcast HTML (PDO) from the server 21 while UI2 is being displayed, a specific browser causes UI11 to be displayed on the monitor 31 (description of event "e" in UI2 of Fig. 8). In addition, if the user selects PDO content as event C, the monitor 31 displays UI11.

Furthermore, when the user selects another PDO content while UI11 is being displayed, a data broadcast HTML document (PDO) is received from the server 21, and the display of UI11 is updated (description of event "h" in UI11 of Fig. 8). Also, when the user selects a Web page while UI11 is being displayed, the relevant Web page HTML document is received from the server 22, and UI12 is displayed on the monitor 31 (description of event "i" in UI11 of Fig. 8).

Because UI11 and UI12 are inside the boundary of the broken line L2, their management mode is set for "Broadcast Unmanaged" in which specific processes cannot be performed using data broadcast HTML document (PDO) or Web page HTML documents. That is, the data broadcast HTML document (PDO) and Web page HTML documents are acquired from the server 21 or 22 not managed by the broadcasting organization and are thus subject to the restrictions on specific processes.

Also, when the user selects to start the reproduction of NRT content while UI2 is being displayed, the monitor 31 displays UI2 of the NRT content being reproduced (description of event "c" in UI2 of Fig. 8). Meanwhile, if the user selects to stop the reproduction of the NRT content being reproduced while UI7 is being displayed, the currently reproduced NRT content is stopped, and the display on the monitor 31 returns to UI2 in effect before the reproduction of the content (description of event "c" in UI7 of Fig. 8).

As will be discussed later in detail, when the user selects to reserve a download of NRT content while UI2 is being displayed, the process of reserving an NRT content download is performed (description of event "d" in UI8 of Fig. 8). At this point, if the procedure for subscribing to the NRT service for viewing the NRT content in question is to be carried out, the process of handling the subscription procedure is performed (description of event "d" in UI9 of Fig. 8). These processes are conducted in the background.

When the user presses the EPG button on the remote controller 32 as event B, the monitor 31 displays UI3 of an EPG (Electronic Program Guide). If the user selects from the EPG the item of which detailed program information is desired to be displayed, the monitor 31 displays UI5 of the detailed program information (description of event "f" in UI3 of Fig. 8).

Also, when the user selects an independent data broadcast channel for example as event D, a broadcast HTML document (NDO) is received from the server 12, and the monitor 31 displays UI5 of the NDO content.

Since UI5 is outside the boundary of the dotted line L2, its management mode is set for "Broadcast Managed" in which a specific process can be performed using a broadcast HTML document (NDO). That is, because the broadcast HTML document (NDO) is acquired from the server 12 managed by the broadcasting organization, the specific process is allowed to be carried out.

As another example, if the user selects desired NRT content from an NRT content list while UI5 is being displayed, the selected NRT content is reserved for download (description of event "n" in UI5 of Fig. 8). At the same time that the process of reserving the download is performed (description of event "n" in UI9 of Fig. 8), the process of handling the procedure for subscribing to the NRT service (description of event "n" in UI9 of Fig. 8) is carried out as needed. These processes are conducted in the background. Alternatively, a download of the selected NRT content may be started immediately without reserving the download.

When the download of the NRT content is terminated or has already been finished, the user may select to start reproduction of the NRT content. In this case, the monitor 31 displays UI7 of the NRT content being reproduced (description of event "m" in UI5 of Fig. 8). On the other hand, if the user selects to stop the NRT content being reproduced, the currently reproduced NRT content is stopped, and the display on the monitor 31 returns to UI5 in effect before the reproduction of the content (description of event "m" in UI7 of Fig. 8).

When the user selects PDO content while UI5 is being displayed, a data broadcast HTML document (PDO) is received from the server 21, and the monitor 31 displays UI11 (description of event "g" in UI5 of Fig. 8).

Furthermore, when the user presses the NRT button on the remote controller 32 as event E, the monitor 31 displays UI6 constituting a portal to NRT contents. When the user selects NDO content from the portal, UI5 is displayed (description of event "j" in UI6 of Fig. 8).

If the user selects to reserve a download of NRT content while UI6 is being displayed, the process of reserving an NRT content download is performed (description of event "k" in UI6 and UI8 of Fig. 8). At this point, the process of handling the procedure for subscribing to the NRT service is carried out as needed (description of event "k" in UI6 and UI9 of Fig. 8). Also, when the user selects to start reproduction of the NRT content while UI6 is being displayed, the monitor 31 displays UI7 of the NRT content being reproduced (description of event "l" in UI6 of Fig. 8). On the other hand, if the user selects to stop the NRT content, the currently reproduced NRT content is stopped, and the display on the monitor 31 returns to UI6 in effect before the reproduction of the content (description of event "l" in UI7 of Fig. 8).

UI transitions take place as explained above depending on each use case. In the example of Fig. 5, the management mode is set for "Broadcast Managed" for data broadcast HTML documents (TDO) and data broadcast HTML documents (NDO), and is set for "Broadcast Unmanaged" for data broadcast HTML documents (PDO) and Web page HTML.

As discussed above, the area in Fig. 5 demarcated by the dotted line L2 constituting the boundary is only an example, with the management mode set differently on either side of the boundary. For example, whereas Fig. 5 shows a typical data broadcast HTML document (NDO) authorized by the broadcasting organization, in the case of a data broadcast HTML document (NDO) not authorized by the broadcasting organization, the management mode is set for "Broadcast Unmanaged." In the latter case, UI5 for example is located inside the boundary of the dotted line L2. Also, whereas Fig. 5 shows a typical data broadcast HTML document (PDO) not authorized by the broadcasting organization, in the case of a data broadcasting document (PDO) authorized by the broadcasting organization, the management mode is set for "Broadcast Managed." In this case, UI11 for example is located outside the boundary of the dotted line L2.

In short, the management mode "Broadcast Managed" is always set for data broadcast documents HTML documents (TDO); for the other data broadcast HTML documents (NDO) and for data broadcast HTML documents (PDO), the management mode varies depending on the authorization being granted or not granted by the broadcasting organization, so that the setting of the management mode for "Broadcast Managed" or "Broadcast Unmanaged" is arbitrary. For the Web page HTML, the management mode is always set for "Broadcast Unmanaged."

Incidentally, "Native app" in Fig. 5 refers to an application program dedicated to the reception apparatus (i.e., application program executed by a control block 68, to be discussed later), and "Browser" refers to the browser for browsing Web sites and others (i.e., browser 73-1 in Fig. 9, to be discussed later).

### [Typical structure of the reception apparatus]

Fig. 9 shows a typical structure of the reception apparatus 30. The reception apparatus 30 is made up of a tuner 61, a demultiplexing block 62, an audio decoder 63, an audio output block 64, a video decoder 65, a trigger detection block 66, a video output block 67, a control block 68, a memory 69, an operation block 70, a recording block 71, a communication interface 72, a browser 73-1, a browser 73-2, and an infrared ray reception block 74.

The tuner 61 receives the digital TV broadcast signal corresponding to the channel selected by the user, demodulates the received signal, and outputs the resulting TS to the demultiplexing block 62. The demultiplexing block 62 demultiplexes the TS input from the tuner 61 into an audio coded signal, a video coded signal, and a control signal, and outputs these signals to the audio decoder 63, video decoder 65, and control block 68 respectively.

Furthermore, the demultiplexing block 62 extracts PCR packets containing trigger information from the TS and outputs the extracted packets to the control block 68.

The audio decoder 63 decodes the input audio coded signal and outputs the audio signal resulting from decoding to the audio output block 64. The audio output block 64 outputs the input audio signal to the subsequent stage (e.g., speakers).

The video decoder 65 decodes the input video coded signal and outputs the video signal resulting from decoding to the trigger detection block 66 and video output block 67.

The trigger detection block 66 continuously monitors the input video signal to detect the trigger information embedded in the video signal and supplies the detected trigger information to the control block 68. Alternatively, the trigger information may be transmitted embedded in the video signal of the AV content corresponding to the digital TV broadcast signal.

Thus when the trigger information embedded in the video signal is transmitted from the broadcast unit 11 to the reception apparatus 30, the trigger detection block 66 detects the trigger information embedded in the input video signal.

In the ensuing description, it is assumed that the trigger information is contained in PCR packets when transmitted. Explanations of the cases where the trigger information is transmitted embedded in the video signal will be omitted where redundant.

The video output block 67 outputs to the monitor 31 (Fig. 3) the video signal input from the video decoder 65. Also, the video output block 67 combines a data broadcast video signal (e.g., corresponding to the picture 42 in Fig. 3) input from the browser 73-1 or 73-2 with the video signal (e.g., corresponding to the picture 41 in Fig. 3) input from the video decoder 65, and causes the monitor 31 to display the resulting composite signal.

Furthermore, the video output block 67 outputs to the monitor 31 the video signal representing a Web page or the like input from the browser 73-1.

The control block 68 controls the blocks making up the reception apparatus 30 by executing relevant control programs recorded beforehand in the memory 69. Also, based on the trigger information input from the demultiplexing block 62 or from the trigger detection block 66, the control block 68 controls acquisition of the data broadcast HTML document (TDO) for implementing the data broadcast service linked to a TV program, execution (start) of the document, firing of events, and stop of the execution.

The memory 69 stores in advance the control programs to be executed by the control block 68. The control programs may be updated based on the update data acquired through the digital TV broadcast signal or over the Internet 20.

Also, the memory 69 has management mode information recorded therein as indicative of a management mode. The management mode is changed when the management mode information is rewritten. The management mode will be discussed later in detail.

The operation block 70 accepts various operations made by the user and notifies the control block 68 of operation signals corresponding to these operations. The infrared ray reception block 74 receives operation signals transmitted from the remote controller 32 (Fig. 3) through wireless communication using infrared rays, and notifies the control block 68 of the received operation signals. The control block 68 controls the components making up the reception apparatus 30 based on the operation signals supplied from the operation block 70 or from the remote controller 32.

Where data broadcast HTML documents are distributed using the digital TV broadcast signal, the recording block 71 has the distributed data broadcast HTML documents input from the demultiplexing block 62 and retained on an internal recording medium.

The communication interface 72 under control of the browser 73-1 or 73-2 connects to the server 12 or 21 via the Internet 20. Then the communication interface 72 under control of the browser 73-1 or 73-2 acquires a data broadcast HTML document from the server 12 or 21 via the Internet 20 and supplies the acquired document to the browser 73-1 or 73-2.

Also, the communication interface 72 under control of the browser 73-1 may connect to the server 22 via the Internet 20. Then the communication interface 72 under control of the browser 73-1 may acquire a Web page HTML document from the server 22 via the Internet 20 and supply the acquired document to the browser 73-1.

The browser 73-1 under control of the control block 68 executes the data broadcast HTML document (TDO) or data broadcast HTML document (NDO) from the communication interface 72 to generate a data broadcast video signal and supplies the generated video signal to the video output block 67.

Also, the browser 73-1 under control of the control block 68 executes the Web page HTML document from the communication interface 72 to generate a video signal indicating a Web page or the like and supplies the generated video signal to the video output block 67.

The browser 73-2 is a special browser stipulated in, say, "Browser Profile A" of NRT 1.0. The browser 73-2 under control of the control block 68 executes the data broadcast HTML document (PDO) from the communication interface 72 to generate a data broadcast video signal and supplies the generated video signal to the video output block 67.

Also, when the tuner 61 receives the digital TV broadcast signal of an NRT broadcast, the demultiplexing block 62 demultiplexes the TS following demodulation and records the TS to the recording block 71. If the user designates reproduction of the NRT content, the recording block 71 under control of the control block 68 supplies an audio coded signal and a video coded signal to the audio decoder 63 and video decoder 65, respectively. In this manner, the NRT content is reproduced.

Incidentally, if the NRT content is acquired from a distribution server (not shown) connected to the Internet 20, the recording block 71 records the NRT content received by the communication interface 72 from the distribution server.

The reception apparatus 30 is structured as described in the above paragraphs.

### [Details of trigger information]

Fig. 10 illustrates the concept of trigger information being embedded in PCR packets of TS when transmitted. As shown in Fig. 10, the trigger information is embedded not in all PCR packets but in those PCR packets suitably timed solely for linkage with the AV content corresponding to TV programs.

Depending on the substance of trigger information, the same trigger information may be transmitted a plurality of times for fear that the transmitted trigger information might be lost and not received by the reception apparatus 30.

Fig. 11 shows where the trigger information is stored in a PCR packet. The PCR packet is a TS packet of which the "adaptation_field" contains a PCR. The trigger information (TriggerInfo_descriptor) is held in a "transport_private_deta_byte" that follows the PCR. When the trigger information is held in the packet, a "transport_private_deta_fag" in "Various_flags" preceding the PCR is set to "1."

Fig. 12 lists typical information items included in the trigger information.

An item "trigger ID" denotes information that identifies the trigger information in question. Where trigger information of the same substance is transmitted a plurality of number of times, the trigger ID of each set of trigger information is the same. An item "trigger type" indicates that this trigger information is of one of four types: application launch (designating the acquisition and execution of the data broadcast HTML document (TDO)), application stop (designating a stop of the currently executing data broadcast HTML document (TDO)), application event (designating firing of an event (e.g., display substance update) in the currently executing data broadcast HTML document (TDO)), and pre-cache (designating only the acquisition of the data broadcast HTML document (TDO)).

An item "application ID" denotes information that identifies the data broadcast HTML document (TDO) corresponding to this trigger information. An item "application type" denotes information that indicates the type (html) of the data broadcast HTML document (TDO) corresponding to this trigger information. An item "business operator ID" denotes information that identifies the business operator (e.g., broadcast station) performing the service of executing the data broadcast HTML document (TDO) corresponding to this trigger information. An item "application URL (Uniform Resource Locator)" denotes the URL of the destination from which to acquire the data broadcast HTML document (TDO) when the trigger type is "application launch" or "pre-cache." An item "stored application ID" is described only for designating the data broadcast HTML document (TDO) which is to be launched and which has been stored (acquired) already, where the trigger type is "application launch" and where any data broadcast HTML document (TDO) is not to be immediately acquired.

An item "auto start flag" is described when the trigger type is "application launch," the flag being set to be either on or off. When the auto start flag is set to be on, auto start (i.e., the data broadcast HTML document (TDO) is automatically started) is in effect. When the auto start flag is set to be off, manual start (i.e., the user is prompted to make operation input and the document is started in response to the operation input having been made).

An item "application stop time" denotes information indicative of the time at which to stop the currently executing data broadcast HTML document (TDO) when the trigger information of which the trigger type is "application stop" is not received.

An item "application name" denotes the name of the data broadcast service (implemented by the data broadcast HTML document (TDO)) to be presented to the user when the "auto start flag" is set for manual start. An item "event ID" denotes information that identifies the event when the trigger type is "application event." It should be noted that not all items explained above are always included in the trigger information; only the items necessary for the timing in question are included.

Fig. 13 shows a typical syntax of the trigger information. The syntax of the trigger information is discretionary and is not limited to what is shown in Fig. 13.

### [TDO content starting process]

Explained next is the trigger information handling process to be performed by the reception apparatus 30 upon receipt of the trigger information.

Fig. 14 is a flowchart explanatory of the TDO content to be started by the trigger information handling process. This process of starting the TDO content is executed upon occurrence of event "a" or "b" in Fig. 5, for example, while the user is viewing a TV program. The TDO content starting process is carried out repeatedly while the digital TV broadcast signal is being received.

In step S1, based on the input from the demultiplexing block 62, the control block 68 waits for a PCR packet including trigger information to be received. Upon receipt of the PCR packet including the trigger information, control is passed to step S2.

In step S2, the control block 68 detects the trigger information from the received PCR packet, and determines whether the processing subsequent to step S3 has already been completed based on the extracted trigger information. If it is determined that the processing subsequent to step S3 has already been completed, control is returned to step S1 and the subsequent steps are repeated. On the other hand, if it is determined that the processing subsequent to step S3 has yet to be performed, control is passed to step S3.

In step S3, the control block 68 identifies the trigger type as "application launch," "application event," "application stop," or "pre-cache."

If in step S3 the trigger type of the trigger information in question is identified as "application launch," control is passed to step S4.

In step S4, the control block 68 determines whether a stored application ID is designated in this trigger information and whether the data broadcast HTML document (TDO) corresponding to the designated ID has already been stored in the recording block 71.

If the result of the determination in step S4 is negative, control is passed to step S5. In step S5, the control block 68 controls the browser 73-1 to access the server 12 corresponding to the application URL in the trigger information so as to acquire the data broadcast HTML document (TDO) corresponding to the application ID in the trigger information. If it turns out that the relevant data broadcast HTML document (TDO) was already acquired from the server 12 corresponding to the above-mentioned URL and has been pre-cached in step S14, to be discussed later, step S5 is skipped so that the document in question may be used in step S7 and subsequent steps. Thereafter, control is passed to step S7.

On the other hand, if it is determined in step S4 that the stored application ID is designated in this trigger information and that the data broadcast HTML document (TDO) corresponding to the designated ID has already been stored in the recording block 71, control is passed to step S6. In step S6, the control block 68 controls the browser 73-1 to read from the recording block 71 the data broadcast HTML document (TDO) corresponding to the stored application ID in the trigger information. Thereafter, control is passed to step S7.

In step S7, the control block 68 determines whether the auto start flag in the trigger information is set for auto start.

If in step S7 it is determined that the auto start flag in the trigger information is not set for auto start (i.e., set for manual start), control is passed to step S8. In step S8, the browser 73-1 under control of the control block 68 prompts the user to perform an operation to start the data broadcast HTML document (TDO) (i.e., executing operation), by displaying a message "Do you want to execute "application (its name) ?"" or the like on the screen. If it is determined in step S9 that the user has input the starting operation in response to the prompt display, control is passed to step S11. In step S11, the browser 73-1 under control of the control block 68 starts (executes) the data broadcast HTML document (TDO) acquired in step S5 or read out in step S6. In this manner, the TDO content is started.

Thereafter, control is returned to step S1 and the subsequent steps are repeated.

In step S9 following the prompt display in step S8, it is determined whether the user has input the starting operation. If in step S9 it is determined that the user has not input the starting operation and if in step S10 it is determined that a predetermined time period has elapsed, then control is returned to step S1 and the subsequent steps are repeated.

If in step S7 it is determined that the auto start flag in the trigger information is set for auto start, control is passed to step S11. In step S11, the browser 73-1 under control of the control block 68 starts the data broadcast HTML document (TDO) acquired in step S5 or read out in step S6. When TDO content is started, control is returned to step S1 and the subsequent steps are repeated.

If in step S3 it is determined that the trigger type of this trigger information is "application event," control is passed to step S12. In step S12, the control block 68 controls the browser 73-1 to fire (i.e., execute) that event on the currently executing HTML document (TDO) which corresponds to the event ID in the trigger information only if the application ID of this trigger information coincides with the application ID of the currently executing data broadcast HTML document (TDO). Thereafter, control is returned to step S1 and the subsequent steps are repeated.

If in step S3 it is determined that the trigger type of this trigger information is "application stop," control is passed to step S13. In step S13, the control block 68 controls the browser 73-1 to stop the currently executing data broadcast HTML document (TDO) only if the application ID of this trigger information coincides with the application ID of the currently executing data broadcast HTML document (TDO). Thereafter, control is returned to step S1 and the subsequent steps are repeated.

Even if the trigger information of which the trigger type is "application stop" is not received, once the current time has reached the "application stop time" described in the trigger information that started the currently executing data broadcast HTML document (TDO), the ongoing data broadcast HTML document (TDO) is stopped.

If in step S3 it is determined that the trigger type of this trigger information is "pre-cache," control is passed to step S14. In step S14, the control block 68 controls the browser 73-1 to access the server 12 corresponding to the application URL in the trigger information so as to acquire the data broadcast HTML document (TDO) corresponding to the application ID in the trigger information and store (pre-cache) the acquired document into storage means such as a cache memory contained in the browser 73-1. Thereafter, control is returned to step S1 and the subsequent steps are repeated.

If the trigger type is "pre-cache" as in the case of step S14, it is possible to acquire the relevant data broadcast HTML document (TDO) prior to the broadcast time of the TV program to be linked. In this manner, the moment the TV program to be linked is started, the corresponding data broadcast HTML document (TDO) can be executed immediately.

This paragraph completes the explanation of the TDO content starting process.

### [Typical screen displays in effect upon execution of the data broadcast HTML document (TDO)]

Fig. 15 shows typical screen transitions in effect when, with the auto start flag in the trigger information set to be off (i.e., manual start), a data broadcast HTML document (TDO) is executed in linkage with the progress of a TV program.

Upon receipt of the trigger information of which the trigger type is "application launch" and of which the auto start flag is off (manual start) while the user is viewing a TV program, the corresponding data broadcast HTML document (TDO) (corresponding to HTML in Fig. 15) is acquired. Then a display (corresponding to "App Start?" in Fig. 15) prompting the user to make an operation to start the data broadcast HTML document (TDO) is displayed superimposed on the picture of the TV program. When the user inputs the starting operation in response to the prompt, the data broadcast HTML document (TDO) is executed. This turns the screen display into the composite picture 43 as shown in Fig. 3 for example, with the TDO content picture 42 superimposed on the TV program picture 41.

If the trigger information of which the trigger type is "application event" is received while the data broadcast HTML document (TDO) is being executed, the event corresponding to the event ID in the trigger information is fired on the currently executing data broadcast HTML document (TDO). This operation changes, on the screen display, what is shown in a TDO content display area (e.g., area where the picture 42 is displayed in Fig. 3) to the picture corresponding to the event ID in the trigger information (e.g., "information 1" is changed to "information 2," "information 2" is changed to "information 3," etc.).

Thereafter, upon receipt of the trigger information of which the trigger type is "application stop," the currently executing data broadcast HTML document (TDO) is terminated, and solely the TV program picture 41 is displayed full screen.

### [Other typical screen displays in effect upon execution of the data broadcast HTML document (TDO)]

Meanwhile, the data broadcast HTML document (TDO) executed in linkage with the progress of the TV program may not necessarily entail screen display. This type of data broadcast HTML document (TDO) can be executed without letting the user of the reception apparatus 30 know that a data broadcast HTML document (TDO) is being executed. This type of data broadcast HTML document (TDO) may be applied when audience research is conducted on TV programs, for example. Specifically, whether or not a given TV program is being viewed may be recorded given the trigger information of which the trigger type is "application event," and the recorded result may be sent to a predetermined server in a suitably timed manner. This makes it possible to check the ratings of TV programs at intervals in which the trigger information of which the trigger type is "application event" is transmitted.

Fig. 16 shows typical screen transitions in effect when, with the auto start flag in the trigger information set to be on (auto start), a data broadcast HTML document (TDO) not entailing screen display is executed in linkage with the progress of a TV program.

Upon receipt of the trigger information of which the trigger type is "application launch" and of which the auto start flag is set to be on (for auto start) while the user is viewing a TV program, the corresponding data broadcast HTML document (TDO) is acquired and executed. It should be noted here that solely the TV program picture 41 remains displayed on the screen.

Upon receipt of the trigger information of which the trigger type is "application event" while the data broadcast HTML document (TDO) is being executed, the event corresponding to the event ID in the trigger information is fired on the currently executing data broadcast HTML document (TDO). In this case, too, only the TV program picture 41 remains displayed on the screen.

Thereafter, upon receipt of the trigger information of which the trigger type is "application stop," the currently executing data broadcast HTML document (TDO) is terminated.

### [Life cycle of the TDO content]

A typical life cycle of the TDO content is explained below in reference to Fig. 17.

Upon receipt of the trigger information of which the trigger type is "application launch" when the data broadcast HTML document (TDO) to be acquired and executed by the reception apparatus 30 is in a TDO stop operation state (corresponding to "TDO Stop" in Fig. 17), i.e., when the reception apparatus 30 has yet to acquire the data broadcast HTML document (TDO), transition occurs from the TDO stop operation state to a TDO active operation state (corresponding to "TDO Active" in Fig. 17), and the data broadcast HTML document (TDO) is acquired from the server 12.

And a display prompting the user to perform an operation to start the data broadcast HTML document (TDO) appears superimposed on the TV program picture. When the user inputs the starting operation in response to the prompt, the data broadcast HTML document (TDO) is started. Then as shown in Fig. 3, the composite picture 43 is displayed on the screen with the TDO content picture 42 superimposed on the TV program picture 41, for example.

In the TDO active operation state, the acquired data broadcast HTML document (TDO) enables the reception apparatus 30 to perform a specific process so as to display the TDO content picture 42. That is, in the TDO active operation state, the management mode of the reception apparatus 30 is set for "Broadcast managed" in which the specific process is allowed to be performed using the data broadcast HTML document (TDO) acquired from the server 12 managed by the broadcasting organization.

Upon receipt of the trigger information of which the trigger type is "application event" in the TDO active operation state, the event corresponding to the event ID in the trigger information is fired on the currently executing data broadcast HTML document (TDO).

In the TDO active operation state, if the trigger information of which the trigger type is "application stop" is received or if the application stop time is reached, transition occurs from the TDO active operation state to the TDO stop operation state. The acquired data broadcast HTML document (TDO) is discarded here for example.

Also, upon receipt of the trigger information of which the trigger type is "pre-cache" in the TDO stop operation state, transition occurs from the TDO stop operation state to a TDO pre-cache ready operation state. The corresponding data broadcast HTML document (TDO) is acquired and pre-cached here for example.

And upon receipt of the trigger information of which the trigger type is "application launch" in the TDO pre-cache ready operation state, transition occurs from the TDO pre-cache ready operation state to the TDO active operation state. In the TDO active operation state, the pre-cached data broadcast HTML document (TDO) is started.

Also in the TDO active operation state, if the user presses a button, etc., linked to a carmaker's Web page or the like, transition occurs from the TDO active operation state to a Web active operation state (corresponding to "Web Active" in Fig. 17). In the Web active operation state, a Web page HTML document from a server 22 not managed by the broadcasting organization is executed, whereby the carmaker's Web page or the like is displayed.

In the Web active operation state, the reception apparatus 30 is not allowed to perform specific processes using the acquired Web page HTML document. That is, in the Web active operation state, the management mode of the reception apparatus 30 is set for "Broadcast unmanaged" in which the specific processes cannot be performed using the Web page HTML document acquired from the server 22 not managed by the broadcasting organization.

In the TDO active operation state (where the management mode is set for "Broadcast managed"), it is necessary to make arrangements for performing specific processes such as the reading of pre-recorded area information from the reception apparatus 30 in order to provide the data broadcast service.

On the other hand, in the Web active operation state (where the management mode is set for "Broadcast unmanaged"), it is necessary to make arrangements for inhibiting specific processes so that such processes as the reading of pre-recorded area information from the reception apparatus 30 will not be fraudulently carried out to make illicit leakage.

Thus when the HTML document to be executed is acquired from the server 12 managed by the broadcasting organization, the reception apparatus 30 has the management mode set for "Broadcast managed" in which specific processes are allowed to be performed, as discussed above.

On the other hand, when the HTML document to be executed is acquired from a server not managed by the broadcasting organization, the reception apparatus 30 has the management mode set for "Broadcast unmanaged" in which specific processes are inhibited.

### [About the management mode]

Fig. 18 shows an example of transition occurring from the TDO active operation state to the Web active operation state while events are being fired one after another in the TDO active operation state, i.e., when the management is set from "Broadcast managed" to "Broadcast unmanaged."

It is assumed here that in each data broadcast HTML document (TDO), the URL identifying the HTML document to be executed to update the TDO content picture 42 is described in linkage with an event ID.

With the above description in place, upon receipt of the trigger information of which the trigger type is "application event," an HTML document "a1.html" for executing the event identified by the event ID included in the trigger information is acquired and executed based on a URL "http://www.a.com/a1.html" described in the data broadcast HTML document (TDO).

Furthermore, when the trigger information of which the trigger type is "application event" is received anew, an HTML document "a2.html" for executing the event identified by the event ID included in that trigger information is acquired and executed based on a URL "http://www.a.com/a2.html" described in the data broadcast HTML document (TDO). This causes the display of the picture 42 to be successively updated with the picture displayed by execution of the HTML document "a1.html" and with the picture displayed by execution of the HTML document "a2.html."

Also, it is assumed that the data broadcast HTML document (TDO) describes in it a destination "http://www.b.com/b1.html" linked to the HTML document "b1.html" to be executed when the user performs an operation to select the driver's picture displayed in the TDO content picture 42 (Fig. 3).

If the user performs an operation to select the driver's picture displayed in the picture 42 (Fig. 3) in the TDO active operation state, transition occurs from the TDO active operation state to the Web active operation state.

In that Web active operation state, based on the link destination "http://www.b.com/b1.html," the reception apparatus 30 acquires the Web page HTML document "b1.html" from the server 22 not managed by the broadcasting organization and executes the acquired document.

As shown in Fig. 18, where some HTML documents targeted for execution are to be acquired from the server 12 and executed in the TDO active operation state, for example, the HTML documents ("a1.html" and "a2.html" in this case) are each acquired from the server 12 ("http://www.a.com/" in this case) managed by the broadcasting organization.

Also in the Web active operation state, for example, another HTML document ("b1.html" in this case) target for execution is acquired from the server 22 ("http://www.b.com/ in this case) not managed by the broadcasting organization.

As explained above, when HTML documents are to be acquired from the server 12 for execution, it is necessary to make arrangements for permitting specific processes to be performed; when HTML documents are to be acquired from a server other than the server 12 for execution, arrangements need to be made to inhibit specific processes.

Then the reception apparatus 30 determines whether a given HTML document targeted for execution is acquired from the server 12 by verifying whether the domain name of the server 12 managed by the broadcasting organization coincides with the domain name of the destination from which the HTML document in question is acquired.

Incidentally, in implementing the data broadcast service the reception apparatus 30 determines whether a given HTML document targeted for execution is acquired from the server 13 by regarding the domain name of the destination from which the first HTML document is acquired, i.e., from which the data broadcast HTML document (TDO) is acquired ("www.a.com" in this case), as the domain name of the server 12 managed by the broadcasting organization.

Based on whether or not the domain name of the HTML document as the destination of transition is the domain name of the server 12 managed by the broadcasting organization, the reception apparatus 30 sets the management mode for either "broadcast managed" or "broadcast unmanaged."

And when the management mode is set for "broadcast managed" (i.e., in the TDO active operation state), the reception apparatus 30 can perform specific processes; when the management mode is set for "broadcast unmanaged" (in the Web active operation state), the reception apparatus 30 cannot perform specific processes.

Whereas in implementing the data broadcast service, the reception apparatus 30 regards the domain name of the destination from which the data broadcast HTML document (TDO) is acquired as the domain name of the server 12 managed by the broadcasting organization, it is also possible alternatively to retain in advance the domain name of the server managed by each broadcaster corresponding to each channel to be received.

Then the reception apparatus 30 may select, from among the domain names retained beforehand, the domain name of the received channel and regard that domain name as the domain name of the server managed by the broadcasting organization.

As another alternative, whereas the reception apparatus 30 uses the domain names to determine whether a given HTML document targeted for execution is acquired from the server 12, any other information may be utilized for the purpose as long as the information in question uniquely identifies the server of the destination from which the document is acquired. For example, in addition to the domain names, the reception apparatus 30 may use MAC (Media Access Control) addresses, IP (Internet Protocol) addresses, etc., to determine whether the HTML document targeted for execution is acquired from the server 12.

Incidentally, whereas the Web page HTML document acquired from the server 22 was explained above as a typical HTML document not authorized by the broadcasting organization in reference to Figs. 17 and 18, the data broadcast HTML documents (NDO) or data broadcast HTML documents (PDO) not authorized by the broadcasting organization are also processed in like manner.

### [NDO content starting process]

Explained below in reference to the flowchart of Fig. 19 is the NDO content starting process.

In step S31, based on the control signal from the operation block 70 or from the remote controller 32, the control block 68 determines whether an event to start NDO content has occurred. A typical event to start NDO content is event D in Fig. 5 that occurs when the user selects an independent data broadcast channel, for example.

For example, if event D in Fig. 5 has occurred and if it is determined that an event to start NDO content has taken place ("Yes" in step S31), control is passed to step S32.

In step S32, the control block 68 controls the browser 73-1 to access the server 12 corresponding to the URL of the NDO content to be started so as to acquire a data broadcast HTML document (NDO). Since the data broadcast HTML document (NDO) acquired here is one that is authorized by the broadcasting organization as in the use case of Fig. 5, the document is obtained from the server 12 managed by the broadcasting organization. In this case, the management mode is set for "Broadcast Managed" for the data broadcast HTML document (NDO) in question.

In step S33, the browser 73-1 under control of the control block 68 starts the data broadcast HTML document (NDO) acquired in step S32. In this manner, the NDO content is started.

Thereafter, control is returned to step S31 and the subsequent steps are repeated.

It was explained above in reference to the example of Fig. 19 that the data broadcast HTML (NDO) is authorized by the broadcasting organization in keeping with the use case of Fig. 5. If a data broadcast HTML document (NDO) is not authorized by the broadcasting organization, that HTML document is acquired from the server 21, and the management mode for that document is set for "Broadcast Unmanaged."

The preceding paragraph completes the explanation of the NDO content starting process.

### [PDO content starting process]

Explained below in reference to the flowchart of Fig. 20 is the PDO content starting process.

In step S51, based on the control signal from the operation block 70 or from the remote controller 32, the control block 68 determines whether an event to start PDO content has occurred. A typical event to start PDO content is event C in Fig. 5 that occurs when the user selects a PDO content channel, for example.

For example, if event C in Fig. 5 has occurred and if it is determined that an event to start PDO content has taken place ("Yes" in step S51), control is passed to step S52.

In step S52, the control block 68 controls the browser 73-2 to access the server 21 corresponding to the URL of the PDO content to be started so as to acquire a data broadcast HTML document (PDO). Since the data broadcast HTML document (PDO) acquired here is one that is not authorized by the broadcasting organization as in the use case of Fig. 5, the document is obtained from the server 21 not managed by the broadcasting organization. In this case, the management mode is set for "Broadcast Unmanaged" for the data broadcast HTML document (PDO) in question.

In step S53, the browser 73-2 under control of the control block 68 starts the data broadcast HTML document (PDO) acquired in step S52. In this manner, the PDO content is started.

Thereafter, control is returned to step S51 and the subsequent steps are repeated.

It was explained above in reference to the example of Fig. 20 that the data broadcast HTML (PDO) is not authorized by the broadcasting organization in keeping with the use case of Fig. 5. If the data broadcast HTML document (PDO) is one that is authorized by the broadcasting organization, that HTML document is acquired from the server 12, and the management mode for the document is set for "Broadcast Managed."

The preceding paragraph completes the explanation of the PDO content starting process.

### [Details of the management mode setting process]

Explained below in reference to the flowchart of Fig. 21 is the management mode setting process performed by the reception apparatus 30 for setting the management mode based on the domain name of the destination from which the HTML document is acquired.

The management mode setting process is started, for example, when the data broadcast HTML document (TDO) is started in step S11 of Fig. 14, or when the data broadcast HTML document (NDO) is started in step S33 of Fig. 19.

In step S71, the control block 68 acquires the domain name of the destination from which the data broadcast HTML document to be started is obtained.

That is, if the data broadcast HTML document (TDO) to be started was acquired in step S5 or S14 of Fig. 14 based on the application URL in the trigger information for example, the control block 68 obtains the domain name of the destination (server 12) from which to acquire the data broadcast HTML document (TDO) to be started based on the application URL in the trigger information.

As another example, if the data broadcast HTML document (TDO) to be started was read from the recording block 71 in step S6 of Fig. 14, the control block 68 controls the browser 73-1 to acquire the domain name of the server 12 that holds the data broadcast HTML document (TDO) to be started and feed the acquired domain name to the control block 68. In this manner, the control block 68 obtains the domain name.

Incidentally, if a data broadcast HTML document (TDO) is to be recorded in the recording block 71, the domain name of the server 12 that holds the data broadcast HTML document (TDO) in question is assumed to be recorded in association with the HTML document (TDO).

As another example, if the data broadcast HTML document (NDO) to be started is acquired in step S32 of Fig. 19 based on the URL designated by the channel selected by the user, the domain mane of the destination (server 12) from which to acquire the data broadcast HTML document (NDO) to be started is obtained on the basis of that URL.

In step S72, the control block 68 controls the browser 73-1 to operate in the management mode "Broadcast Managed" in which specific processes are allowed to be performed. That is, since the data broadcast HTML document (TDO) and data broadcast HTML document (NDO) in this example are acquired from the server 12 managed by the broadcasting organization, the control block 68 controls the execution of the HTML documents by the browser 73-1 in a manner permitting (not restricting) the specific processes to be carried out through HTML document execution.

In step S73, the control block 68 determines whether a document transition has occurred involving HTML documents on the basis of the input trigger information, control signals from the operation block 70, or the remote controller 32. Once it is determined that a document transition has taken place, control is passed to step S74.

In step S74, the control block 68 determines whether the HTML document as the transition destination is acquired from the server 12 managed by the broadcasting organization, based on whether the domain name of the destination from which the HTML document as the transition destination is obtained coincides with the domain name acquired in step S71.

If in step S74 it is determined that the HTML document as the transition destination is acquired from the server 12, control is returned to step S73 and the subsequent steps are repeated with the browser 73-1 allowed to keep operating in the management mode "Broadcast Managed."

Also, if in step S74 it is determined that the HTML document as the transition destination is not acquired from the server 12, control is passed to step S75.

For example, if event "e" occurs while UI2 in Fig. 5 is being displayed, transition takes place from the data broadcast HTML document (TDO) to the data broadcast HTML document (PDO). In this case, the data broadcast HTML document (PDO) as the transition destination is acquired from the server 21 and the domain names of the documents involved do not coincide with each other. Thus the result of the determination process in step S74 is negative ("No"), and control is passed to step S75.

As another example, if event "g" occurs while UI5 in Fig. 5 is being displayed, transition takes place from the data broadcast HTML document (NDO) to the data broadcast HTML document (PDO). In this case, too, the data broadcast HTML document (PDO) as the transition destination is acquired from the server 21 and the domain names of the documents involved do not coincide with each other, so that control is passed to step S75.

In step S75, the control block 68 controls the browser 73-1 or 73-2 to operate in the management mode "Broadcast Unmanaged" in which specific processes are not allowed to be performed. That is, the control block 68 controls the execution of the HTML documents by the browser 73-1 or 73-2 in a manner not permitting (restricting) the specific processes to be carried out through HTML document execution.

In this case, the browser 73-2, for example, is inhibited from performing the specific processes, and carries out the data broadcast HTML document (PDO) as the destination HTML document.

Incidentally, it is assumed that the data broadcast HTML document (TDO) is stopped based on the trigger information of which the trigger type is "application stop" while the data broadcast HTML document (PDO) is being executed.

Thereafter in step S76, based on the operation signal from the operation block 70 or from the remote controller 32, the control block 68 determines whether a predetermined operation such as event B in Fig. 5 has been performed. When it is determined that the predetermined operation has been carried out, control is returned to step S71 and the subsequent steps are repeated. For example, the control block 68 determines whether trigger information is input to start a new data broadcast HTML document (TDO). When it is determined that the relevant trigger information is input, control is returned to step S71 and the subsequent steps are repeated.

As explained above, in the management mode transition process, if the domain name of the data broadcast HTML document coincides with the domain name of the HTML document as the transition destination, the management mode is set for "Broadcast managed"; if the domain name of the data broadcast HTML document does not coincide with the domain name of the HTML document as the transition destination, the management mode is set for "Broadcast unmanaged."

And where the management mode is set for "Broadcast managed," such processes as the reading of the user's pre-recorded area information from the reception apparatus 30 are carried out through execution of the data broadcast HTML document (TDO) or the data broadcast HTML document (NDO). Where the management mode is set for "Broadcast unmanaged," the processes not intended by the user such as the read process will not be performed through execution of the data broadcast HTML document (PDO) or the Web page HTML document.

Thus even if a data broadcast HTML document (PDO) or a Web page HTML document prepared by a malicious third party is acquired and executed, the processes not intended by the user are inhibited from getting performed.

### <2. Variations>

In the above-described embodiment, as shown in Fig. 17, the operation state of the data broadcast HTML document the data broadcast HTML document (TDO) is one of four states: TDO stop operation state, TDO pre-cache ready operation state, TDO active state, and Web active state. Alternatively, as shown in Fig. 22, there may be added a TDO suspended operation state (corresponding to "TDO Suspend" in Fig. 22) to the existing four operation states, so that there may be five operation states in total.

In this case, as shown in Fig. 23, a new trigger type "suspend" is added as part of the trigger information. Thus the trigger type in the trigger information may denote one of five types: application launch, application stop, application event, pre-cache, and suspend.

In Fig. 22, upon receipt of the trigger information of which the trigger type is "suspend" in the TDO active operation state, the operation state of the corresponding data broadcast HTML document (TDO) makes transition to the TDO suspended operation state. In this case, with the corresponding data broadcast HTML document (TDO) having transitioned to the TDO suspended operation state, other data broadcast HTML documents (TDO) may be placed in the TDO active operation state and executed.

Upon receipt of the trigger information of which the trigger type is "application launch" in the TDO suspended operation state, the corresponding data broadcast HTML document (TDO) makes transition to the TDO active operation state. This makes it possible to fire events on the data broadcast HTML document (TDO). At this point, any other data broadcast HTML document (TDO) is caused to make transition from the TDO active operation state to the TDO suspended operation state.

Although the foregoing description has explained that the data broadcast HTML documents are acquired by accessing the servers connected to the Internet, the embodiment of this technology may alternatively transmit data broadcast HTML documents using a predetermined frequency band for broadcasting data broadcast content as part of the broadcast band of the digital TV broadcast signal. For example, data broadcast HTML documents may be transmitted using FLUTE (File Delivery over Unidirectional Transport) sessions stipulated in RFC 3926. In this case, the channel information of the FLUTE session may be used, for example, to determine whether the data broadcast HTML document as the destination of the document transition that took place is under management of the broadcasting organization (step S74 in Fig. 21).

Also, if it is possible to acquire a data broadcast HTML document through communication or through broadcast, that data broadcast HTML document may be obtained either through communication or through broadcast in accordance with the priority of a predetermined destination from which to obtain the document.

Also, although the foregoing description has explained that the data broadcast HTML documents authorized by the broadcasting organization are retained in the server 12 managed on the side of the broadcasting organization and the data broadcast HTML documents not authorized by the broadcasting organization are held in the server 21 managed by some other business operator, the authorized data broadcast HTML documents may alternatively be retained in the server 21 managed by other business operators such as content producers. That is, the server 21 may hold either the authorized data broadcast HTML documents or the unauthorized data broadcast HTML documents, or both types of HTML documents. On the other hand, the server 12 retains solely the authorized data broadcast HTML documents.

### [Typical structure of the computer]

Incidentally, the series of processes described above may be executed either by hardware or by software. Where the software-based series of processing is to be carried out, the programs constituting the software may be either incorporated beforehand in the dedicated hardware of the computer to be used or installed upon use from a suitable program recording medium into a general-purpose personal computer or like equipment capable of executing diverse functions based on the installed programs.

Fig. 24 is a block diagram showing a typical structure of a computer that performs the above-described series of processes using programs.

In this computer 100, a CPU (Central Processing Unit) 101, a ROM (Read Only Memory) 102, and a RAM (Random Access Memory) 103 are interconnected via a bus 104.

An input/output interface 105 is further connected to the bus 104. The input/output interface 105 is connected with an input block 106 typically made of a keyboard, a mouse and a microphone; an output block 107 generally composed of a display and speakers; a storage block 108 usually formed by a hard disk, a nonvolatile memory or the like; a communication block 109 typically constituted by a network interface; and a drive 110 that drives removable media 111 such as magnetic disks, optical disks, magnetooptical disks, or semiconductor memories.

In the computer structured as outlined above, the CPU 101 performs the above-described series of processes by loading relevant programs from, say, the storage block 108 through the input/output interface 105 and bus 105 into the RAM 108 for execution.

Incidentally, the programs to be executed by the computer may be processed in the depicted sequence of this specification (i.e., on a time series basis), in parallel, or in otherwise appropriately timed fashion such as when they are invoked as needed.

Also, the programs may be processed by a single computer or by a plurality of computers on a distributed basis. The programs may also be transferred to a remote computer or computers for execution.

In this specification, the term "system" refers to an entire configuration made up of a plurality of component devices.

Also, it should be understood that this technology when embodied is not limited to the above-described embodiments and that various modifications, variations and alternatives may be made of this technology so far as they are within the scope of the invention, as defined by the appended claims.

## Claims

1. A reception apparatus for receiving AV content broadcast by broadcast waves, said reception apparatus comprising:
a reception block for receiving said AV content;
a trigger detection block configured to detect trigger information which is transmitted along with said AV content and which concerns acquisition of a description document for displaying content different from said received AV content, the description document including instructions in a predetermined computer language for displaying the content, wherein the trigger information comprises a uniform resource locator, URL, identifying the description document;
a determination block configured to determine based on the URL whether the description document is managed by a broadcasting organization broadcasting said AV content or by a business operator other than said broadcasting organization, wherein the determination block is configured to determine that the description document is managed by said broadcasting organization if the description document is to be acquired from an information processing apparatus that is managed by said broadcasting organization;
an acquisition block configured to acquire the description document in accordance with the detected trigger information;
a control block configured to control execution of said acquired description document in accordance with the result of the determination made by said determination block; and
an execution block configured to execute the acquired description document, wherein, if it is determined that said description document is managed by said broadcasting organization, said control block controls said execution block to operate in a first management mode in which a predetermined process can be performed, and wherein, if it is determined that said description document is managed by said other business operator, said control block controls said execution block to operate in a second management mode in which said process cannot be performed.

2. The reception apparatus according to claim 1, wherein, if a predetermined operation is performed while said execution block is operating in said second management mode, said control block causes said execution block to exit said second management mode and enter said first management mode.

3. The reception apparatus according to claim 1, wherein said acquisition block acquires said description document transmitted using a predetermined frequency band of a digital television broadcast signal of said broadcast waves.

4. A reception method for receiving AV content broadcast by broadcast waves, the method comprising the steps of:
receiving said AV content;
detect trigger information which is transmitted along with said AV content and which concerns acquisition of a description document for displaying content different from said received AV content, the description document including instructions in a predetermined computer language for displaying the content, wherein the trigger information comprises a uniform resource locator, URL, identifying the description document;
determining, based on the URL, whether the description document is managed by a broadcasting organization broadcasting said AV content or by a business operator other than said broadcasting organization, wherein it is determined that the description document is managed by said broadcasting organization if the description document is to be acquired from an information processing apparatus that is managed by a broadcasting organization;
based on the detected trigger information, acquiring said description document; and
executing the acquired description document, wherein, if it is determined that said description document is managed by said broadcasting organization, operating in a first management mode in which a predetermined process can be performed, and wherein, if it is determined that said description document is managed by said other business operator, operating in a second management mode in which said process cannot be performed.

5. The reception method according to claim 4, wherein, if a predetermined operation is performed while operating in said second management mode, exiting said second management mode and entering said first management mode.

6. The reception method according to claim 4, wherein said description document is received via a predetermined frequency band of a digital television broadcast signal of said broadcast waves.

7. A program for controlling a reception apparatus, said program comprising instructions which, when executed, carry out the method according to claim 4.

## Patentansprüche

1. Empfangsvorrichtung zum Empfangen von AV-Inhalt, der durch Rundfunkwellen rundgesendet wird, wobei die Empfangsvorrichtung Folgendes aufweist:
einen Empfangsblock zum Empfangen des AV-Inhalts;
einen Auslöserdetektionsblock, der dazu ausgebildet ist, Auslöserinformationen zu detektieren, die zusammen mit dem AV-Inhalt übertragen werden und die die Erfassung eines Beschreibungsdokuments zum Anzeigen von Inhalt, der von dem empfangenen AV-Inhalt verschieden ist, betreffen, wobei das Beschreibungsdokument Befehle in einer vorgegebenen Computersprache zum Anzeigen des Inhalts aufweist, wobei die Auslöserinformationen einen "Uniform Resource Locator", URL, aufweisen, der das Beschreibungsdokument identifiziert;
einen Bestimmungsblock, der dazu ausgebildet ist, auf der Basis des URL zu bestimmen, ob das Beschreibungsdokument durch eine Rundfunkorganisation, die den AV-Inhalt rundsendet, oder durch einen anderen Geschäftsbetreiber als die Rundfunkorganisation gemanagt wird, wobei der Bestimmungsblock dazu ausgebildet ist zu bestimmen, dass das Beschreibungsdokument durch die Rundfunkorganisation gemanagt wird, wenn das Beschreibungsdokument von einer Datenverarbeitungsvorrichtung erfasst werden soll, die durch die Rundfunkorganisation gemanagt wird;
einen Erfassungsblock, der dazu ausgebildet ist, das Beschreibungsdokument gemäß den detektierten Auslöserinformationen zu erfassen;
einen Steuerblock, der dazu ausgebildet ist, die Ausführung des erfassten Beschreibungsdokuments gemäß dem Ergebnis der durch den Bestimmungsblock durchgeführten Bestimmung zu steuern; und
einen Ausführungsblock, der dazu ausgebildet ist, das erfasste Beschreibungsdokument auszuführen, wobei dann, wenn bestimmt wird, dass das Beschreibungsdokument durch die Rundfunkorganisation gemanagt wird, der Steuerblock den Ausführungsblock steuert, um in einem ersten Managementmodus zu arbeiten, in dem ein vorgegebener Prozess durchgeführt werden kann, und wobei dann, wenn bestimmt wird, dass das Beschreibungsdokument durch den anderen Geschäftsbetreiber gemanagt wird, der Steuerblock den Ausführungsblock steuert, um in einem zweiten Managementmodus zu arbeiten, in dem der Prozess nicht durchgeführt werden kann.

2. Empfangsvorrichtung nach Anspruch 1, wobei dann, wenn eine vorgegebene Operation durchgeführt wird, während der Ausführungsblock im zweiten Managementmodus arbeitet, der Steuerblock bewirkt, dass der Ausführungsblock den zweiten Managementmodus verlässt und in den ersten Managementmodus eintritt.

3. Empfangsvorrichtung nach Anspruch 1, wobei der Erfassungsblock das Beschreibungsdokument erfasst, das unter Verwendung eines vorgegebenen Frequenzbandes eines digitalen Fernsehrundfunksignals der Rundfunkwellen übertragen wird.

4. Empfangsverfahren zum Empfangen von AV-Inhalt, der durch Rundfunkwellen rundgesendet wird, wobei das Verfahren die folgenden Schritte aufweist:
Empfangen des AV-Inhalts;
Detektieren von Auslöserinformationen, die zusammen mit dem AV-Inhalt übertragen werden und die die Erfassung eines Beschreibungsdokuments zum Anzeigen von Inhalt, der von dem empfangenen AV-Inhalt verschieden ist, betreffen, wobei das Beschreibungsdokument Befehle in einer vorgegebenen Computersprache zum Anzeigen des Inhalts aufweist, wobei die Auslöserinformationen einen "Uniform Resource Locator", URL, aufweisen, der das Beschreibungsdokument identifiziert;
auf der Basis des URL Bestimmen, ob das Beschreibungsdokument durch eine Rundfunkorganisation, die den AV-Inhalt rundsendet, oder durch einen anderen Geschäftsbetreiber als die Rundfunkorganisation gemanagt wird, wobei bestimmt wird, dass das Beschreibungsdokument durch die Rundfunkorganisation gemanagt wird, wenn das Beschreibungsdokument von einer Datenverarbeitungsvorrichtung erfasst werden soll, die durch eine Rundfunkorganisation gemanagt wird;
auf der Basis der detektierten Auslöserinformationen Erfassen des Beschreibungsdokuments; und
Ausführen des erfassten Beschreibungsdokuments, wobei, wenn bestimmt wird, dass das Beschreibungsdokument durch die Rundfunkorganisation gemanagt wird, Arbeiten in einem ersten Managementmodus, in dem ein vorgegebener Prozess durchgeführt werden kann, und wobei, wenn bestimmt wird, dass das Beschreibungsdokument durch den anderen Geschäftsbetreiber gemanagt wird, Arbeiten in einem zweiten Managementmodus, in dem der Prozess nicht durchgeführt werden kann.

5. Empfangsverfahren nach Anspruch 4, wobei, wenn eine vorgegebene Operation während des Arbeitens in dem zweiten Managementmodus durchgeführt wird, Verlassen des zweiten Managementmodus und Eintreten in den ersten Managementmodus.

6. Empfangsverfahren nach Anspruch 4, wobei das Beschreibungsdokument über ein vorgegebenes Frequenzband eines digitalen Fernsehrundfunksignals der Rundfunkwellen empfangen wird.

7. Programm zum Steuern einer Empfangsvorrichtung, wobei das Programm Anweisungen umfasst, die bei Ausführung das Verfahren nach Anspruch 4 ausführen.

## Revendications

1. Appareil de réception pour recevoir un contenu audiovisuel diffusé par des ondes de diffusion, ledit appareil de réception comprenant :
un bloc de réception pour recevoir ledit contenu audiovisuel ;
un bloc de détection de déclenchement configuré pour détecter des informations de déclenchement qui sont transmises avec ledit contenu audiovisuel et qui concernent l'acquisition d'un document de description pour afficher un contenu différent dudit contenu audiovisuel reçu, le document de description comprenant des instructions dans un langage informatique prédéterminé pour afficher le contenu, où les informations de déclenchement comprennent un localisateur de ressource uniforme, URL, identifiant le document de description ;
un bloc de détermination configuré pour déterminer, sur la base de l'URL, si le document de description est géré par un organisme de diffusion diffusant ledit contenu audiovisuel ou par un opérateur commercial autre que ledit organisme de diffusion, où le bloc de détermination est configuré pour déterminer que le document de description est géré par ledit organisme de diffusion si le document de description doit être acquis à partir d'un appareil de traitement d'informations qui est géré par ledit organisme de diffusion ;
un bloc d'acquisition configuré pour acquérir le document de description en fonction des informations de déclenchement détectées ;
un bloc de commande configuré pour commander l'exécution dudit document de description acquis en fonction du résultat de la détermination effectuée par ledit bloc de détermination ; et
un bloc d'exécution configuré pour exécuter le document de description acquis, où, s'il est déterminé que ledit document de description est géré par ledit organisme de diffusion, ledit bloc de commande contrôle ledit bloc d'exécution pour qu'il fonctionne dans un premier mode de gestion dans lequel un processus prédéterminé peut être exécuté, et où, s'il est déterminé que ledit document de description est géré par ledit autre opérateur commercial, ledit bloc de commande contrôle ledit bloc d'exécution pour qu'il fonctionne dans un second mode de gestion dans lequel ledit processus ne peut pas être exécuté.

2. Appareil de réception selon la revendication 1, dans lequel, si une opération prédéterminée est exécutée pendant que ledit bloc d'exécution fonctionne dans ledit second mode de gestion, ledit bloc de commande amène ledit bloc d'exécution à sortir dudit second mode de gestion et à entrer dans ledit premier mode de gestion.

3. Appareil de réception selon la revendication 1, dans lequel ledit bloc d'acquisition acquiert ledit document de description transmis en utilisant une bande de fréquence prédéterminée d'un signal de diffusion de télévision numérique desdites ondes de diffusion.

4. Procédé de réception pour recevoir un contenu audiovisuel diffusé par des ondes de diffusion, le procédé comprenant les étapes suivantes :
recevoir ledit contenu audiovisuel ;
détecter des informations de déclenchement qui sont transmises avec ledit contenu audiovisuel et qui concernent l'acquisition d'un document de description pour afficher un contenu différent dudit contenu audiovisuel reçu, le document de description comprenant des instructions dans un langage informatique prédéterminé pour afficher le contenu, où les informations de déclenchement comprennent un localisateur de ressource uniforme, URL, identifiant le document de description ;
déterminer, sur la base de l'URL, si le document de description est géré par un organisme de diffusion diffusant ledit contenu audiovisuel ou par un opérateur commercial autre que ledit organisme de diffusion, où il est déterminé que le document de description est géré par ledit organisme de diffusion si le document de description doit être acquis à partir d'un appareil de traitement d'informations qui est géré par un organisme de diffusion ;
sur la base des informations de déclenchement détectées, acquérir ledit document de description ; et
exécuter le document de description acquis, où, s'il est déterminé que ledit document de description est géré par ledit organisme de diffusion, fonctionner dans un premier mode de gestion dans lequel un processus prédéterminé peut être exécuté, et où, s'il est déterminé que ledit document de description est géré par ledit autre opérateur commercial, fonctionner dans un second mode de gestion dans lequel ledit processus ne peut pas être exécuté.

5. Procédé de réception selon la revendication 4, où, si une opération prédéterminée est réalisée tout en fonctionnant dans ledit deuxième mode de gestion, la sortie dudit deuxième mode de gestion et l'entrée dans ledit premier mode de gestion.

6. Procédé de réception selon la revendication 4, dans lequel ledit document de description est reçu par le biais d'une bande de fréquence prédéterminée d'un signal de diffusion de télévision numérique desdites ondes de diffusion.

7. Programme pour commander un appareil de réception, ledit programme comprenant des instructions qui, lorsqu'elles sont exécutées, exécutent le procédé selon la revendication 4.
